# EUROPEAN PATENT SPECIFICATION

(11) **EP 4 425 323 B1**
(45) Date of publication and mention of the grant of the patent: **25.11.2026**
(21) Application number: 23739869.8
(22) Date of filing: 05.01.2023
(51) Int. Cl.: G06F 9/451, G06F 3/0481, G06F 3/04817, G06F 3/0484, G06F 3/14, G06F 8/38, H04M 1/72412, H04M 1/72448, H04M 1/725

(54) **APPEARANCE SETTING METHOD AND ELECTRONIC DEVICE**
ERSCHEINUNGSEINSTELLVERFAHREN UND ELEKTRONISCHE VORRICHTUNG
PROCÉDÉ DE RÉGLAGE D'APPARENCE ET DISPOSITIF ÉLECTRONIQUE

(30) Priority: 14.01.2022 CN 202210044725
(43) Date of publication of application: 04.09.2024
(73) Proprietor: Huawei Technologies Co., Ltd., Shenzhen, Guangdong 518129 (CN)
(72) Inventor: REN, Guofeng, Shenzhen, Guangdong 518129 (CN); SHI, Jinde, Shenzhen, Guangdong 518129 (CN)
(74) Representative: Maiwald GmbH
(86) International application number: PCT/CN2023/070570
(87) International publication number: WO 2023/134525

(56) References cited:
- CN-A- 104 038 921
- CN-A- 104 038 921
- CN-A- 106 055 221
- CN-A- 106 502 652
- CN-A- 111 163 227
- CN-A- 113 805 703
- CN-A- 113 867 657
- CN-A- 115 145 519
- US-A1- 2005 093 868
- US-A1- 2017 010 848
- US-A1- 2021 019 106
- US-A1- 2021 349 672

## Description

This application claims priority to Chinese Patent Application No. 202210044725.5, filed with the China National Intellectual Property Administration on January 14, 2022 and entitled "APPEARANCE SETTING METHOD AND ELECTRONIC DEVICE".

### TECHNICAL FIELD

Embodiments of this application relate to the communication field, and in particular, to an appearance setting method and an electronic device.

### BACKGROUND

With rapid development of a mobile internet and gradual improvement of performance of a smart terminal, a requirement of people on an appearance of a terminal device is increasingly high. The appearance of the terminal is content displayed by the terminal externally, for example, a wallpaper, an icon, and a ringtone. The content may be referred to as an appearance element. When a plurality of appearance elements are provided to the terminal at the same time or operated by the terminal, a set of these appearance elements is referred to as an appearance package. However, an existing appearance package usually can only be used for an appearance setting on a current device, and lacks interestingness of appearance display. US 2021/349672 A1 describes a system and method to increase display area utilizing a plurality of discrete displays. US 2005/093868 A1 describes a distributed sensing techniques for mobile devices. CN 104 038 921 A describes a method and system for theme interaction between mobile terminals. US 2017/010848 A1 describes a multi-device pairing and combined display. CN 106 055 221 A describes a method for screen picture interactions among multiple electronic devices and electronic system.

### SUMMARY

This application provides an appearance setting method and an electronic device, to implement appearance package interaction between electronic devices, so as to improve user experience and interestingness. The invention is set out in the appended set of claims.

### BRIEF DESCRIPTION OF DRAWINGS

FIG. 1 is a schematic diagram of an architecture of a communication system according to an embodiment of this application;
FIG. 2 is a schematic diagram of a hardware structure of an electronic device according to an embodiment of this application;
FIG. 3 is a block diagram of a software structure of an electronic device according to an embodiment of this application;
FIG. 4 is a schematic flowchart of an appearance setting method according to an embodiment of this application;
FIG. 5(a) to FIG. 5(d) are a schematic diagram of a user interface according to an embodiment of this application;
FIG. 6(a) and FIG. 6(b) are a schematic diagram of another user interface according to an embodiment of this application;
FIG. 7(a) to FIG. 7(d) are a schematic diagram of still another user interface according to an embodiment of this application;
FIG. 8(a) and FIG. 8(b) are a schematic diagram of still another user interface according to an embodiment of this application;
FIG. 9(a) to FIG. 9(c) are a schematic diagram of still another user interface according to an embodiment of this application;
FIG. 10 is a schematic flowchart of triggering interaction through near-field sensing according to an embodiment of this application;
FIG. 11 is a schematic flowchart of triggering interaction at a predetermined time according to an embodiment of this application;
FIG. 12 is a schematic flowchart of triggering interaction through real-time interaction according to an embodiment of this application;
FIG. 13 is a schematic flowchart of another appearance setting method according to an embodiment of this application;
FIG. 14 is a schematic diagram of a structure of an electronic device according to an embodiment of this application;
FIG. 15 is a schematic diagram of a structure of another electronic device according to an embodiment of this application; and
FIG. 16 is a schematic diagram of a structure of still another electronic device according to an embodiment of this application.

### DESCRIPTION OF EMBODIMENTS

The following describes the technical solutions in this application with reference to the accompanying drawings. It is clear that the described embodiments are merely some rather than all of embodiments of this application.

In descriptions of embodiments of this application, "at least one" means one or more than one, and "a plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following pieces (items)" or a similar expression thereof indicates any combination of these items, including a single item (piece) or any combination of a plurality of items (pieces). For example, at least one of a, b, or c may indicate: a, b, c, a and b, a and c, b and c, or a, b and c, where a, b, and c may be singular or plural.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more than two.

Currently, most electronic devices can support personalized appearance settings such as a theme setting, a static/dynamic wallpaper setting, an icon setting, and an always-on display setting. Generally, a user may perform an appearance setting on the electronic device by using a resource package, for example, set a theme by using a theme resource package, or set a wallpaper by using a wallpaper resource package. There are a plurality of types of resource packages that are supported by the electronic device and that are used for the appearance setting. Resource packages of various types may be combined to form an interface style that satisfies a preference of the user.

In this application, various resource packages used for the appearance setting of the electronic device may be collectively referred to as an appearance package (or referred to as an appearance resource package). The appearance package includes but is not limited to a theme resource package, a wallpaper resource package, an icon resource package, an always-on display resource package, and the like. The appearance package may include one or more appearance elements such as a theme, a wallpaper (including a home screen wallpaper and a lock screen wallpaper), an icon, a font, a ringtone, and an always-on display style.

During delivery of the electronic device, one or more appearance packages may be preset locally for direct use by the user. Alternatively, the user may browse, download, or purchase the appearance package online on a personalized setting interface, and download the appearance package from a cloud for local use. After the user sets the appearance package, the appearance element in the appearance package is applied to a user interface of the electronic device.

To implement appearance display interaction between a plurality of electronic devices, in the conventional technology, after downloading a specified theme from a server and installing the specified theme, an electronic device 1 may send information about an interaction theme corresponding to the specified theme to an electronic device 2. After the electronic device 2 determines to interact with the electronic device 1, the electronic device 2 may download, from the server, the interaction theme corresponding to the specified theme and install the interaction theme, to implement theme interaction between the electronic devices.

However, in the foregoing solution, although associated theme resources may be set between the plurality of electronic devices through interaction, interesting interaction between appearance interfaces cannot be implemented.

To resolve the foregoing technical problem, embodiments of this application provide an appearance setting method. The method may be applied to a system including a first electronic device and a second electronic device, and may be specifically applied to a scenario in which the first electronic device and the second electronic device perform appearance package interaction, so that convenient and rapid appearance package interaction between the two electronic devices can be implemented.

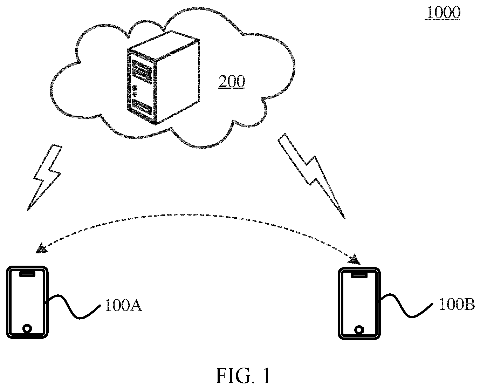

The following describes a system architecture in embodiments of this application. FIG. 1 is a schematic diagram of an architecture of a communication system 1000 according to an embodiment of this application. The communication system 1000 may include at least two electronic devices, for example, an electronic device 100A of a user A and an electronic device 100B of a user B. The communication system 1000 further includes a cloud server 200. The electronic device may include at least one of a mobile phone, a foldable electronic device, a tablet computer, a desktop computer, a laptop computer, a handheld computer, a notebook computer, an ultra-mobile personal computer (Ultra-Mobile Personal Computer, UMPC), a netbook, a cellular phone, a personal digital assistant (Personal Digital Assistant, PDA), an augmented reality (Augmented Reality, AR) device, a virtual reality (Virtual Reality, VR) device, an artificial intelligence (Artificial Intelligence, AI) device, a wearable device, a vehicle-mounted device, a smart home device, and a smart city device. A specific type of the electronic device is not specifically limited in embodiments of this application. For example, the cloud server 200 may include a Huawei media server (Huawei Media Server, HMS). The cloud server 200 may establish a connection and communicate with the electronic device through at least one of a 2G network, a 3G network, a 4G network, a 5G network, and a wireless local area network (wireless local area network, WLAN). The cloud server 200 may be configured to provide an appearance resource package for downloading by the electronic device, and the like.

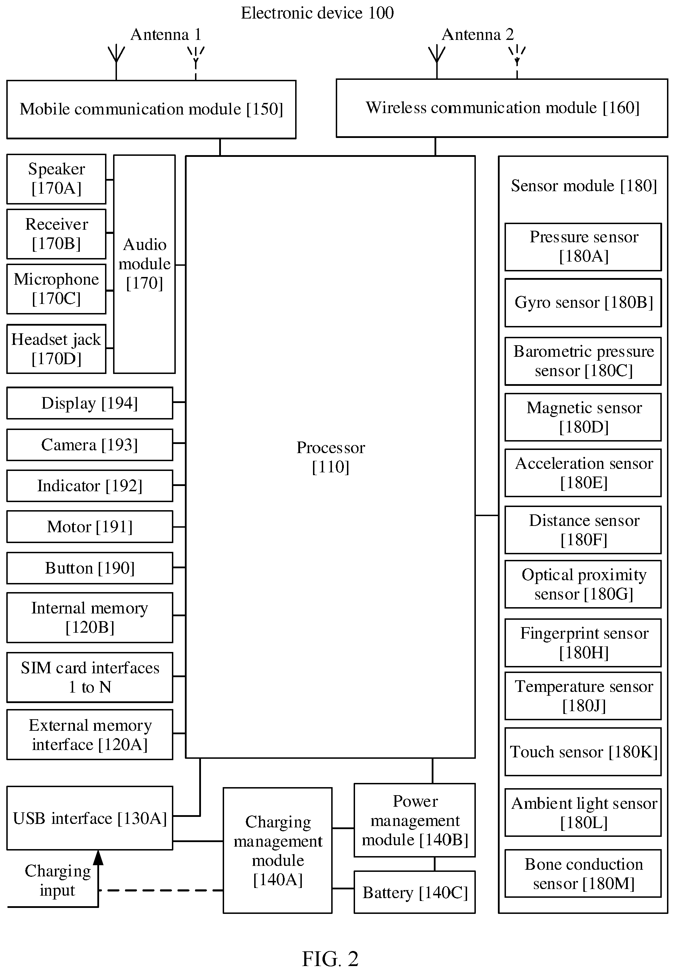

FIG. 2 is a schematic diagram of a hardware structure of the electronic device 100A.

The electronic device 100A may include a processor 110, an external memory interface 120A, an internal memory 120B, a universal serial bus (universal serial bus, USB) interface 130A, a charging management module 140A, a power management module 140B, a battery 140C, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100A. In some other embodiments of this application, the electronic device 100A may include more or fewer components than those shown in the figure, or combine some of the components, or split some of the components, or have different arrangements of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor 110 may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 may be a cache. The memory may store instructions or data just used or frequently used by the processor 110. If the processor 110 needs to use the instructions or the data, the processor 110 may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module, for example, the touch sensor, the audio module, the wireless communication module, the display, and the camera through at least one of the foregoing interfaces.

It can be understood that an interface connection relationship between the modules illustrated in embodiments of this application is merely an example for description, and does not constitute a limitation on a structure of the electronic device 100A. In some other embodiments of this application, the electronic device 100A may alternatively use an interface connection manner different from that in the foregoing embodiment, or use a combination of a plurality of interface connection manners.

The USB interface 130A is a connector complying with a USB standard specification, and may be configured to connect the electronic device 100A to a peripheral device, and may be specifically a mini USB interface, a micro USB interface, a USB type-C interface, or the like. The USB interface 130A may be configured to connect to a charger, so that the charger charges the electronic device 100A, or may be configured to connect to another electronic device, to implement data transmission between the electronic device 100A and the another electronic device, or may be configured to connect to a headset, to output, through the headset, an audio stored in the electronic device. The interface may alternatively be configured to connect to another electronic device, for example, a VR device. In some embodiments, the USB standard specification may be USB 1.x, USB 2.0, USB 3.x, or USB 4.

The charging management module 140A is configured to receive a charging input of the charger. The charger may be a wireless charger or a wired charger. In some embodiments of wired charging, the charging management module 140A may receive a charging input of a wired charger through the USB interface 130A. In some embodiments of wireless charging, the charging management module 140A may receive a wireless charging input through a wireless charging coil of the electronic device 100A. When charging the battery 140C, the charging management module 140A may further supply power to the electronic device 100A by using the power management module 140B.

The power management module 140B is configured to connect to the battery 140C, the charging management module 140A, and the processor 110. The power management module 140B receives an input from the battery 140C and/or an input from the charging management module 140A, and supplies power to the processor 110, the internal memory 120B, the display 194, the camera 193, and the like. The power management module 140B may be further configured to monitor parameters such as a battery capacity, a battery cycle count, and a battery health status (electric leakage or impedance). In some other embodiments, the power management module 140B may alternatively be disposed in the processor 110. In some other embodiments, the power management module 140B and the charging management module 140A may alternatively be disposed in a same component.

A wireless communication function of the electronic device 100A may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100A may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution for wireless communication including 2G/3G/4G/5G and the like to be applied to the electronic device 100A. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, and the like), and displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100A and that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra wideband (ultra wideband, UWB), a global navigation satellite system (global navigation satellite system, GNSS), frequency modulation (frequency modulation, FM), a near-field communication (near-field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100A, the antenna 1 and the mobile communication module 150 are coupled, and the antenna 2 and the wireless communication module 160 are coupled, so that the electronic device 100A can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100A may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100A may include one or more displays 194.

The electronic device 100A may implement a photographing function by using the camera module 193, the ISP, the video codec, the GPU, the display 194, the application processor AP, the neural-network processing unit NPU, and the like.

The camera module 193 may be configured to collect color image data and depth data of a photographed object. The ISP may be configured to process the color image data collected by the camera module 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera module 193.

In some embodiments, the camera module 193 may include a color camera module and a 3D sensing module.

In some embodiments, a photosensitive element of a camera of the color camera module may be a charge-coupled device (charge-coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV.

In some embodiments, the 3D sensing module may be a (time of flight, TOF) 3D sensing module or a structured light (structured light) 3D sensing module. Structured light 3D sensing is an active depth sensing technology, and basic components of the structured light 3D sensing module may include an infrared (Infrared) transmitter, an IR camera module, and the like. A working principle of the structured light 3D sensing module is to first transmit a light spot of a specific pattern (pattern) to a photographed object, and then receive coding (light coding) of the light spot of the pattern on a surface of the object, to compare the light spot with an original projected light spot in terms of a similarity and a difference, and calculate three-dimensional coordinates of the object based on a trigonometric principle. The three-dimensional coordinates include a distance between the electronic device 100A and the photographed object. TOF 3D sensing may be an active depth sensing technology. Basic components of the TOF 3D sensing module may include an infrared (Infrared) transmitter, an IR camera module, and the like. A working principle of the TOF 3D sensing module is to calculate a distance (namely, a depth) between the TOF 3D sensing module and the photographed object by using an infrared refraction time, to obtain a 3D depth-of-field image.

The structured light 3D sensing module may be further applied to fields such as facial recognition, somatic game console, and industrial machine vision detection. The TOF 3D sensing module may be further applied to fields such as a game console and augmented reality (augmented reality, AR)/virtual reality (virtual reality, VR).

In some other embodiments, the camera module 193 may further include two or more cameras. The two or more cameras may include a color camera, and the color camera may be configured to collect color image data of the photographed object. The two or more cameras may collect depth data of the photographed object by using a stereo vision (stereo vision) technology. The stereo vision technology is based on a principle of a parallax of human eyes. Under a natural light source, two or more cameras are used to photograph a same object from different angles, and then an operation like a triangulation method is performed to obtain distance information, that is, depth information, between the electronic device 100A and the photographed object.

In some embodiments, the electronic device 100A may include one or more camera modules 193. Specifically, the electronic device 100A may include one front-facing camera module 193 and one rear-facing camera module 193. The front-facing camera module 193 may be usually configured to collect color image data and depth data of a photographer facing the display 194, and the rear-facing camera module may be configured to collect color image data and depth data of a photographed object (for example, a character or a scenery) facing the photographer.

The digital signal processor may be configured to process a digital signal, and may further process another digital signal. For example, when the electronic device 100A selects a frequency, the digital signal processor is configured to perform Fourier transform and the like on frequency energy.

The video codec is configured to compress or decompress a digital video. The electronic device 100A may support one or more types of video codecs. In this way, the electronic device 100A can play or record videos in a plurality of encoding formats such as moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of an electronic device 100A may be implemented by using the NPU, for example, image recognition, facial recognition, speech recognition, and text understanding.

The external memory interface 120A may be configured to connect to an external storage card, for example, a micro SD card, to extend a storage capability of the electronic device 100A. The external memory card communicates with the processor 110 through the external memory interface 120A, to implement a data storage function. For example, files such as music and a video are stored in the external storage card, or files such as music and a video are transmitted from the electronic device to the external storage card.

The internal memory 120B may be configured to store computer-executable program code. The executable program code includes instructions. The internal memory 120B may include a program storage area and a data storage area. The program storage area may store an operating system, an application required by at least one function (for example, a sound playing function or an image playing function), and the like. The data storage area may store data (such as audio data and a phone book) created during use of the electronic device 100A, and the like. In addition, the internal memory 120B may include a high-speed random-access memory, and may further include a non-volatile memory, for example, at least one magnetic disk storage component, a flash memory component, and a universal flash storage (universal flash storage, UFS). The processor 110 runs the instructions stored in the internal memory 120B, and/or the instructions stored in the memory disposed in the processor, to perform various function methods of the electronic device 100A and data processing.

The electronic device 100A may implement an audio function by using the audio module 170, the speaker 170A, the receiver 170B, the microphone 170C, the headset jack 170D, the application processor, and the like, for example, music playing and sound recording.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100A may be used to listen to music or output an audio signal of a call in a hands-free mode through the speaker 170A.

The receiver 170B, also referred to as an "earpiece", is configured to convert an electrical audio signal into a sound signal. When a call is answered or audio information is listened to by using the electronic device 100A, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth of the user, to input a sound signal to the microphone 170C. At least one microphone 170C may be disposed in the electronic device 100A. In some other embodiments, two microphones 170C may be disposed in the electronic device 100A, to collect a sound signal and further implement a noise reduction function. In some other embodiments, three, four, or more microphones 170C may alternatively be disposed in the electronic device 100A, to collect a sound signal, implement noise reduction, identify a sound source, implement a directional recording function, and the like.

The headset jack 170D is configured to connect to a wired headset. The headset jack 170D may be a USB interface 130A, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 may include a power button, a volume button, and the like. The button 190 may be a mechanical button, or may be a touch button. The electronic device 100A may receive a button input, and generate a button signal input related to a user setting and function control of the electronic device 100A.

The motor 191 may generate a vibration prompt. The motor 191 may be configured to provide an incoming call vibration prompt and a touch vibration feedback. For example, touch operations performed on different applications (such as photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 may be a hardware module, and is configured to connect to a SIM card. The SIM card may be inserted into the SIM card interface 195 or removed from the SIM card interface 195, to implement contact with or separation from the electronic device 100A. The electronic device 100A may support one or more SIM card interfaces. The SIM card interface 195 may support a nano-SIM card, a micro-SIM card, a SIM card, and the like. A plurality of cards may be inserted into a same SIM card interface 195 at the same time. Types of the plurality of cards may be the same or may be different. The SIM card interface 195 may be compatible with different types of SIM cards. The SIM card interface 195 may also be compatible with an external storage card. The electronic device 100A interacts with a network through the SIM card, to implement functions such as a call and data communication. In some embodiments, the electronic device 100A uses an eSIM, namely, an embedded SIM card. The eSIM card may be embedded into the electronic device 100A, and cannot be separated from the electronic device 100A.

A software system of the electronic device 100A may use a layered architecture, an event-driven architecture, a microkernel architecture, a micro service architecture, or a cloud architecture. In embodiments of the present invention, an Android system of a layered architecture is used as an example to illustrate a software structure of the electronic device 100A.

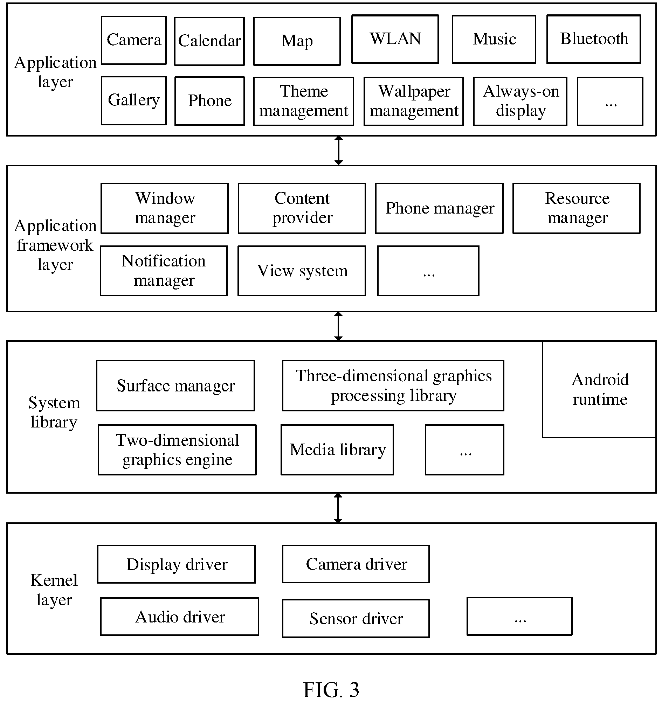

FIG. 3 is a block diagram of the software structure of the electronic device 100A according to an embodiment of the present invention.

In the layered architecture, software is divided into several layers. Each layer has a clear role and task. The layers communicate with each other through a software interface. In some embodiments, the Android system is divided into five layers: an application layer, an application framework layer, Android runtime (Android runtime, ART) and a native C/C++ library, a hardware abstraction layer, and a kernel layer from top to bottom.

The application layer may include a series of application packages. As shown in FIG. 3, the application package may include applications such as Camera, Gallery, Calendar, Phone, Map, WLAN, Music, and Bluetooth. The application layer may further include a theme management module, a wallpaper management module, an always-on display module, and the like, to provide an interaction interface and a display effect for the user of the electronic device.

The application framework layer provides an application programming interface (application programming interface, API) and a programming framework for an application at the application layer. The application framework layer includes some predefined functions. The application framework layer may provide a capability of resource management and an interaction display effect for a plurality of associated interaction devices.

As shown in FIG. 3, the application framework layer may include a window manager, a content provider, a view system, a resource manager, a notification manager, an activity manager, an input manager, and the like.

The window manager provides a window manager service (window manager service, WMS). The WMS can be used for window management, window animation management, and surface management, and as a transit point for an input system.

The content provider is used to store and obtain data, and enable the data to be accessed by an application. The data may include a video, an image, an audio, calls that are made and received, a browsing history and a bookmark, a phone book, and the like. The content provider provides support for data access between applications.

The view system includes visual controls such as a control for displaying a text and a control for displaying an image. The view system may be used to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be used to convey a notification message. The notification manager may automatically disappear after a short pause without requiring user interaction. For example, the notification manager is used to notify download completion, give a message notification, and the like. The notification manager may alternatively be a notification that appears in a top status bar of the system in a form of a graph or a scroll bar text, for example, a notification of an application that is run in the background, or may be a notification that appears on a screen in a form of a dialog window. For example, text information is displayed in the status bar, an announcement is given, the electronic device vibrates, or the indicator light blinks.

The activity manager may provide an activity manager service (activity manager service, AMS). The AMS may be used to start, switch, and schedule a system component (for example, an activity, a service, a content provider, or a broadcast receiver), and manage and schedule an application process.

The input manager may provide an input manager service (input manager service, IMS). The IMS may be used for managing a system input, for example, a touchscreen input, a button input, or a sensor input. The IMS obtains an event from an input device node and allocates the event to an appropriate window through interaction with the WMS.

The Android runtime includes a kernel library and Android runtime. The Android runtime is responsible for converting source code into bytecode, converting the bytecode into machine code, and running the machine code. In terms of a compilation technology, the Android runtime supports an ahead-of-time (ahead-of-time, AOT) compilation technology and a just-in-time (just-in-time, JIT) compilation technology. During installation of an application, bytecode is converted into machine code through AOT compilation, and the machine code is stored in the memory. When the application is running, some bytecode is converted into machine code in real time through JIT compilation.

The kernel library is mainly used to provide functions of basic Java libraries such as a basic data structure library, a mathematics library, an I/O library, a tool library, a database, and a network library. The kernel library provides the API for the user to develop an Android application.

The native C/C++ library may include a plurality of functional modules such as a surface manager (surface manager), a media framework (media framework), libc, OpenGL ES, SQLite, and Webkit. The surface manager is used to manage a display subsystem and provide fusion of 2D and 3D layers for a plurality of applications. The media framework supports playback and recording of audio and videos in a plurality of commonly used formats, static image files, and the like. The media library may support a plurality of audio and video encoding formats such as MPEG-4, H.264, MP3, AAC, AMR, JPG, and PNG. Herein, libc is a C standard function library. OpenGL ES provides drawing and manipulation of 2D and 3D graphics in an application. SQLite provides a lightweight relational database for an application. Webkit provides support for a browser kernel.

The modules at the application framework layer are written in Java, and the modules in the native C/C++ library are written in C/C++. Communication between the module at the application framework layer and the module in native C/C++ library may be implemented through a Java native interface (Java native interface, JNI).

The hardware abstraction layer runs in user space (user space), encapsulates a driver at the kernel layer, provides a calling interface for an upper layer, and may include a display module, a camera module, an audio module, and a Bluetooth module.

The kernel layer is a layer between hardware and software. The kernel layer may include a display driver, a camera driver, an audio driver, and a Bluetooth driver, and may further include another sensor driver. In addition to providing a hardware driver, the kernel layer also supports functions such as memory management, system process management, file system management, and power supply management.

For a hardware structure and a software structure of the electronic device 100B in this application, refer to the foregoing descriptions of the electronic device 100A.

The following uses interaction between the electronic device 100A and the electronic device 100B as an example to describe, with reference to an application scenario, a method for setting an appearance between associated electronic devices in embodiments of this application.

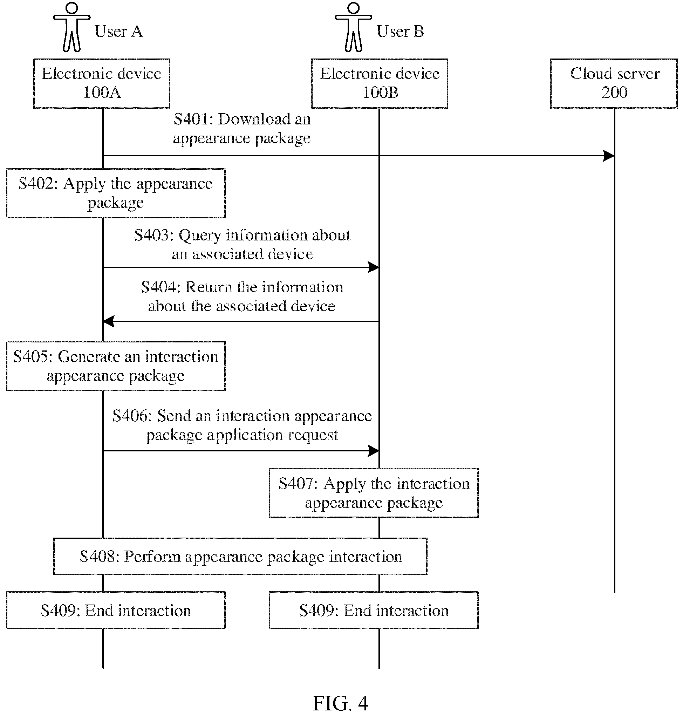

FIG. 4 is a schematic flowchart of an appearance setting method according to an embodiment of this application. As shown in FIG. 4, the method may include but is not limited to the following steps.

S401: The electronic device 100A downloads an appearance package.

For example, the user A may browse an appearance package resource on the electronic device 100A, and download the appearance package from the cloud server 200. The appearance package resource may be free or not free.

Optionally, the user A may alternatively select an appearance package resource preset on the electronic device 100A or an offline appearance package resource without downloading the appearance package resource from the cloud server 200.

S402: The electronic device 100A applies the appearance package.

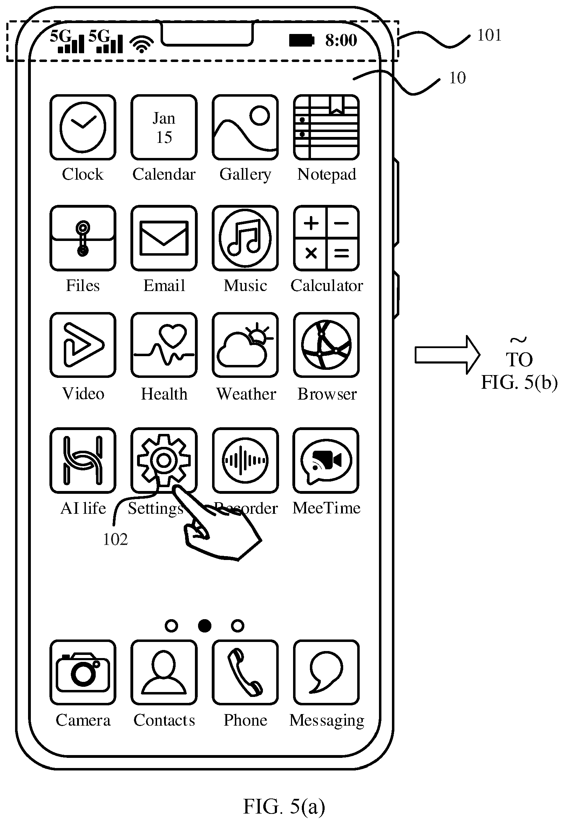

For example, an appearance element of the appearance package includes a lock screen wallpaper. FIG. 5(a) to FIG. 5(d) are a schematic diagram of an interface on which the user A sets and applies a wallpaper. As shown in FIG. 5(a), the electronic device 100A may display a user interface 10 of a home screen. A page including an application icon is displayed on the user interface 10. The page may include a plurality of application icons (such as a clock application icon, a calendar application icon, a gallery application icon, a notepad application icon, a file application icon, an email application icon, and a setting application icon 102). A page indicator is further displayed below the plurality of application icons, to indicate a location relationship between a currently displayed page and another page. There are a plurality of tray icons (such as a camera application icon, a phone book application icon, a phone application icon, and a messaging application icon) below the page indicator. The tray icons remain displayed during page switching. A status bar 101 is displayed in an upper part of the user interface 10. The status bar 101 may include one or more signal strength indicators of a mobile communication signal (which may also be referred to as a cellular signal), a battery status indicator, a time indicator, one or more signal strength indicators of a Wi-Fi signal, and the like. In some embodiments, the user interface may alternatively be in another form. This is not limited in embodiments of this application.

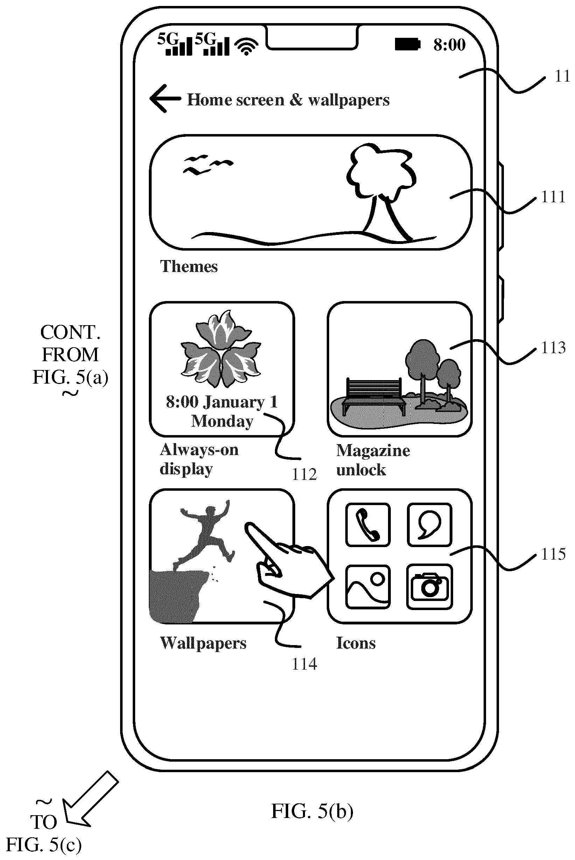

As shown in FIG. 5(b), the user A may enter a home screen and wallpaper setting interface 11 by performing an operation on the setting application icon 102. As shown in FIG. 5(b), the home screen and wallpaper setting interface 11 may include a plurality of controls such as a theme control 111, an always-on display control 112, a magazine unlock control 113, a wallpaper control 114, and an icon control 115. The control is a visual graphical interface element presented to a user, is a software component included in an application, and controls data processed by the application and an interaction operation about the data. The user may interact with the control through an operation, for example, a touch or a slide, to read and edit related information of the application. Generally, the control may include visual interface elements such as an icon, a button, a menu, a tab, a text box, a dialog box, a status bar, and a navigation bar. In response to operations (such as a touch operation or a tap operation) of the user on different controls, different appearance setting interfaces may be displayed on a screen of the electronic device 100A.

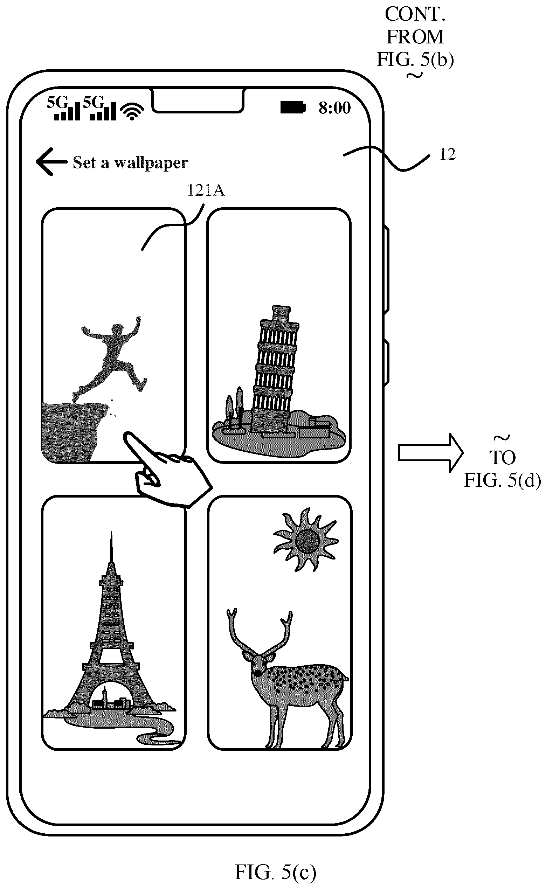

For example, in response to an operation performed by the user on the wallpaper control 114, a wallpaper setting interface 12 is displayed on the screen of the electronic device 100A. As shown in FIG. 5(c), the wallpaper setting interface 12 may include one (type of) or more (types of) wallpapers (such as a wallpaper 121A), and the user A may set the wallpaper by performing an operation on the wallpaper. Optionally, after the user A selects the wallpaper, a prompt and confirmation box (not shown in the figure) may be displayed on the screen of the electronic device 100A, to confirm the selection of the user A. In some embodiments, the user A may further choose to set the wallpaper as a lock screen wallpaper, a home screen wallpaper, or both a lock screen wallpaper and a home screen wallpaper.

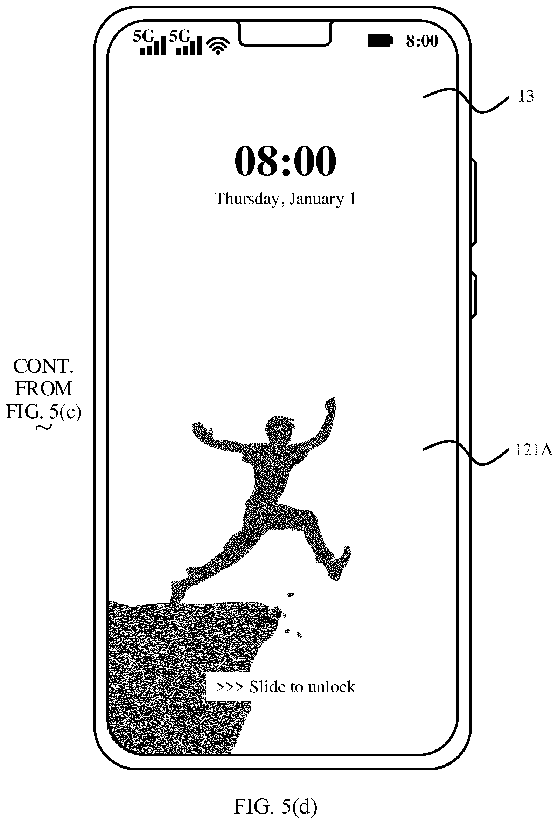

For example, as shown in FIG. 5(d), after the user A chooses to set the wallpaper 121A as the lock screen wallpaper, when the electronic device 100A is in a screen-locked state, the wallpaper 121A is displayed on a lock screen interface 13 of the electronic device 100A.

S403: The electronic device 100A queries information about an associated device.

For example, the electronic device 100A queries the information about the associated device, and identifies the associated electronic device 100B of the electronic device 100A shown in FIG. 1. The associated electronic device 100B may be an electronic device identified by using a hyper terminal (for example, a hyper terminal formed by a plurality of HarmonyOS^{®} devices). Alternatively, the electronic device 100A and the electronic device 100B may be connected through a hotspot of the electronic device 100A. In other words, the electronic device 100B is connected to the hotspot transmitted by the electronic device 100A. Alternatively, the electronic device 100A and the electronic device 100B may be connected through a Wi-Fi network transmitted by a same router. Alternatively, the electronic device 100A and the electronic device 100B are connected by using another wireless short-range communication technology, for example, a near-field communication (Near-Field Communication, NFC) technology.

It should be noted that, in embodiments of this application, interaction between the two devices 100A and 100B is merely used as an example for description. In another embodiment, interaction may be performed between more than two electronic devices. In other words, the electronic device 100A may be associated with one or more electronic devices. This is not limited in this application.

S404: The electronic device 100B returns device information.

Specifically, the associated electronic device 100B sends the device information of the associated electronic device 100B to the electronic device 100A. For example, the device information sent by the electronic device 100B may include one or more of a device form of the electronic device 100B, a screen display size, and user information of the electronic device 100B.

S405: The electronic device 100A generates an interaction appearance package.

For example, the electronic device 100A may generate the interaction appearance package for the associated electronic device 100B based on one or more pieces of information such as the device form of the associated electronic device 100B, the screen display size, the user information of the electronic device 100B, role information in an associated interaction scenario, and an interaction parameter.

The device form of the electronic device 100B may be a device type of the electronic device 100B, for example, a mobile phone, a foldable electronic device, a tablet computer, or a large screen. The user information of the electronic device 100B may be information about a logged-in user account (for example, a Huawei account) on the electronic device 100B, or the like. The role information in the associated interaction scenario may be a relationship (for example, a couple relationship) between the user B of the electronic device 100B and the user A of the electronic device 100A. The interaction parameter may include an interaction time, an interaction trigger condition, an interaction effect, and the like.

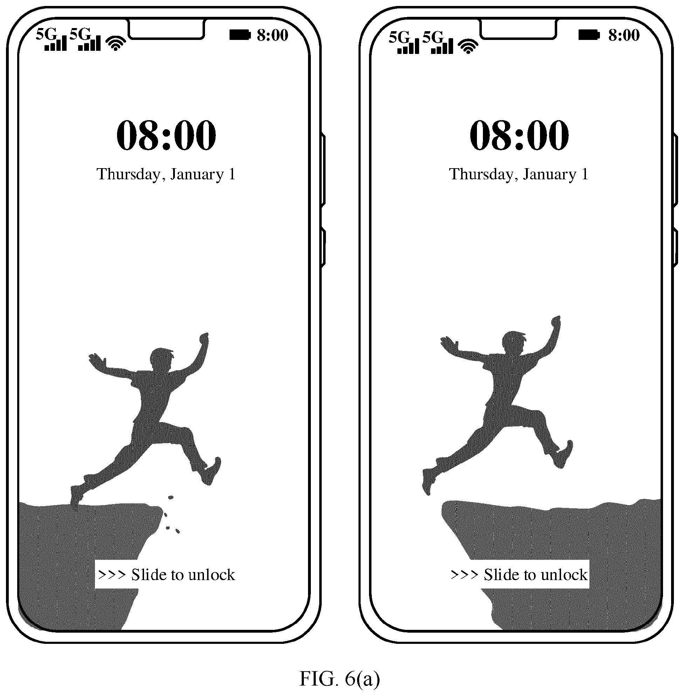

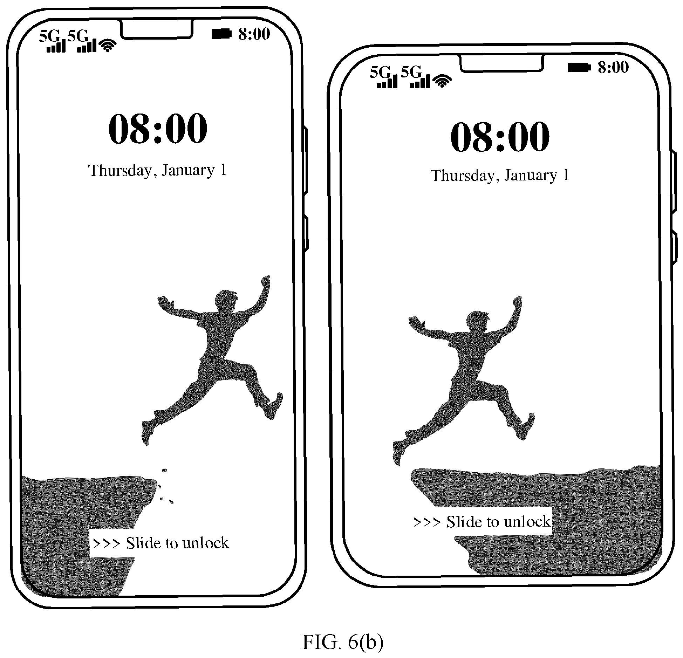

For example, the appearance element of the appearance package includes the lock screen wallpaper. In step S505, the electronic device 100A may generate an interaction lock screen wallpaper for the associated electronic device 100B based on the screen display size of the electronic device 100B. As shown in FIG. 6(a) and FIG. 6(b), when screen display sizes of electronic devices 100B are different, sizes of lock screen wallpapers generated by the electronic device 100A for the electronic devices 100B are also different. Optionally, the electronic device 100A may perform key information identification on a color and content of an original lock screen wallpaper (the wallpaper 121A), separately select different pieces of key information for the electronic device 100A and the electronic devices 100B, and perform processing based on the screen display size, such as cropping, scaling, mirroring, rotation, and folding, to generate interaction lock screen wallpapers that have an interaction effect but have different content. As shown in FIG. 6(a) and FIG. 6(b), the electronic device 100A generates, for the associated electronic devices having the different screen display sizes, the interaction lock screen wallpapers that match the screen sizes of the associated electronic devices.

In a possible implementation, the electronic device 100A may alternatively generate the interaction appearance package for the electronic device B based on the interaction parameter selected by the user. Specifically, the interaction parameter selected by the user may include one or more of an interaction contact, an interaction device, an interaction trigger condition, and an interaction effect (or referred to as an interaction effect parameter). For example, the interaction effect may be an animation effect during appearance package interaction, for example, a motion track and a frame rate of an animation. It may be understood that, in this embodiment, if the user A selects the interaction contact, the interaction contact selected by the user A is the user B; and if the user A selects the interaction device, the interaction device selected by the user A is the electronic device 100B.

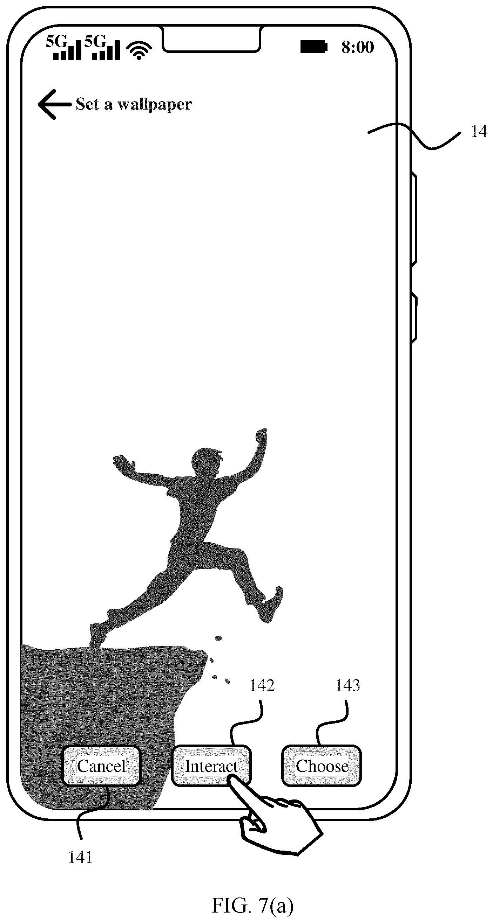

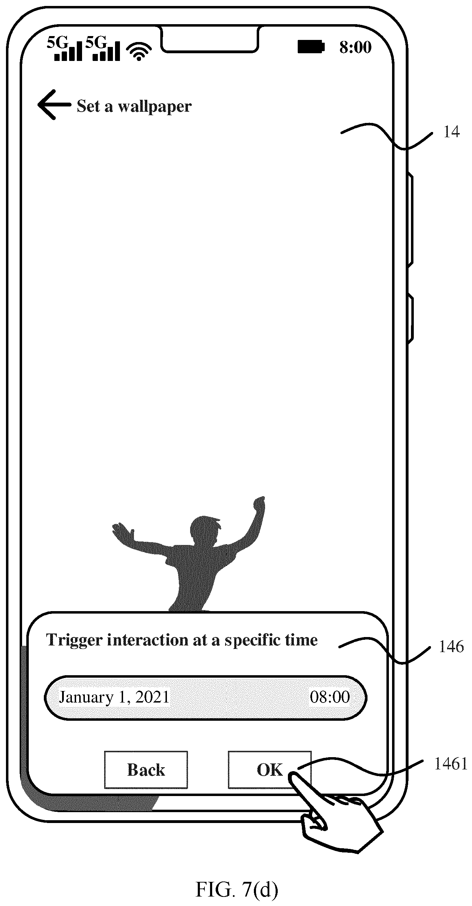

FIG. 7(a) to FIG. 7(d) are an example of a schematic diagram of selecting the interaction parameter by the user A.

For example, the user A sets the electronic device 100A to perform lock screen wallpaper interaction with the electronic device 100B. As shown in FIG. 5(c), in response to an operation performed by the user A on the wallpaper 121A, a wallpaper setting interface 14 shown in FIG. 7(a) is displayed on the screen of the electronic device 100A. The wallpaper setting interface 14 may include a cancel control 141, an interaction control 142, and a choosing control 143. The cancel control 141 is used to cancel a current wallpaper setting operation. The interaction control 142 is used to set interaction information. The choosing control 143 is used to choose to set a wallpaper, for example, choose to set the wallpaper as the lock screen wallpaper, the home screen wallpaper, or both the lock screen wallpaper and the home screen wallpaper.

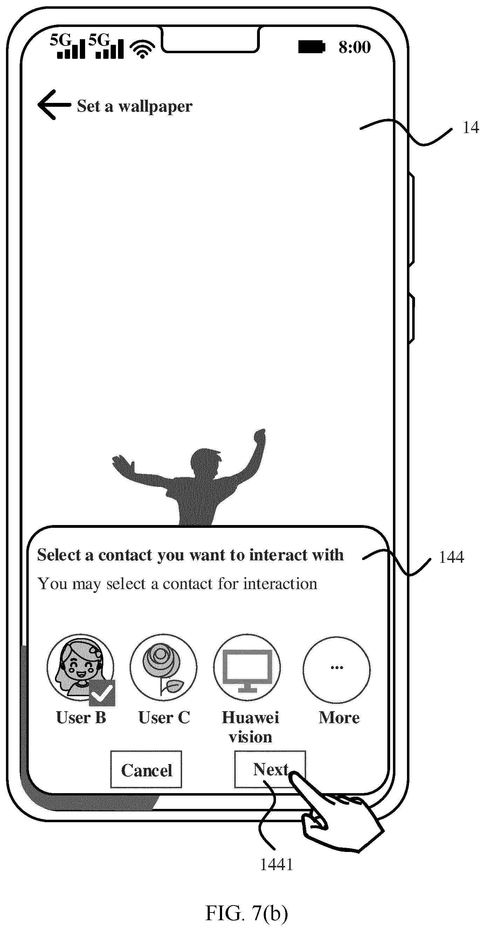

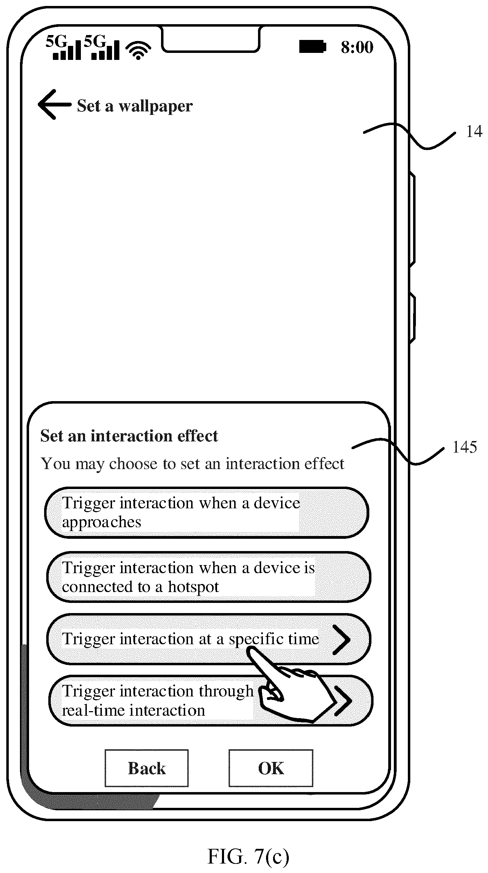

As shown in FIG. 7(b), in response to an operation performed by the user A on the interaction control 142, a contact selection window 144 is displayed on the wallpaper setting interface 14. Optionally, the user A may select, for interaction, a contact or select another device associated with the electronic device 100A. The contact selection window 144 may include a next-step control 1441. For example, in response to an operation performed by the user A on the next-step control 1441, an interaction effect setting window 145 shown in FIG. 7(c) is displayed on the wallpaper setting interface 14. The user A may set a condition for triggering interaction (namely, the interaction trigger condition) in the interaction effect setting window 145. In other words, when a preset condition is met, the electronic device 100A may trigger interaction with the associated electronic device 100B. The preset condition may include at least one of the following: near-field sensing interaction (as shown in FIG. 7(a) to FIG. 7(d), "Trigger interaction when a device approaches"), interaction at a predetermined time (as shown in FIG. 7(a) to FIG. 7(d), "Trigger interaction at a specific time"), and real-time interaction (as shown in FIG. 7(a) to FIG. 7(d), "Trigger interaction in real time"), and Bluetooth/hotspot connection interaction (as shown in FIG. 7(a) to FIG. 7(d), "Trigger interaction when a device is connected to a hotspot"). For example, near-field sensing interaction may be as follows: After the electronic device 100A identifies, through NFC near-field identification or by using an identity, a distance sensor, or the like, that the associated electronic device 100B approaches, appearance package interaction is triggered. Interaction at a predetermined time may be as follows: The electronic device 100A and the electronic device 100B for which associated interaction is set perform appearance package interaction at a predetermined time and on a predetermined date. Real-time interaction may be as follows: The user A performs a real-time operation to trigger interaction between the electronic device 100A and the associated electronic device 100B. Bluetooth/hotspot connection interaction may be as follows: When the associated electronic device 100B is connected to Bluetooth or a hotspot of the electronic device 100A, appearance package interaction between the electronic device 100A and the associated electronic device 100B is triggered.

For example, as shown in FIG. 7(c), after the user A selects "Trigger interaction at a specific time" (namely, interaction at a predetermined time), a time setting window 146 is displayed on the wallpaper setting interface 14. The user A may set an interaction date and/or time in the time setting window 146. The time setting window 146 may include a confirmation control 1461. In response to an operation performed by the user A on the confirmation control 1461, the electronic device 100A may generate the interaction appearance package. The interaction appearance package includes an associated lock screen wallpaper generated by the electronic device 100A for the associated electronic device 100B.

It may be understood that FIG. 7(a) to FIG. 7(d) merely show an example of an interface layout. A specific interface for setting the appearance package and selecting the interaction parameter by the user may be in another form. This is not limited in this application.

In some embodiments, the electronic device 100A may establish a connection to the electronic device 100B in advance, and obtain and store the device information (for example, the screen display size) of the associated electronic device 100B. In this way, after the electronic device 100A chooses to interact with the associated electronic device 100B, the electronic device 100A may generate the interaction appearance package for the associated electronic device 100B. In some other embodiments, the electronic device 100A may alternatively obtain the device information of the associated electronic device 100B after the user A selects an interaction user or device (for example, in FIG. 7(b), the user A chooses to interact with the user B), and then generate the interaction appearance package for the electronic device 100B.

S406: The electronic device 100A sends an interaction appearance package application request to the associated electronic device 100B. Correspondingly, the associated electronic device 100B receives the interaction appearance package application request sent by the electronic device 100A.

S407: The associated electronic device 100B applies the interaction appearance package.

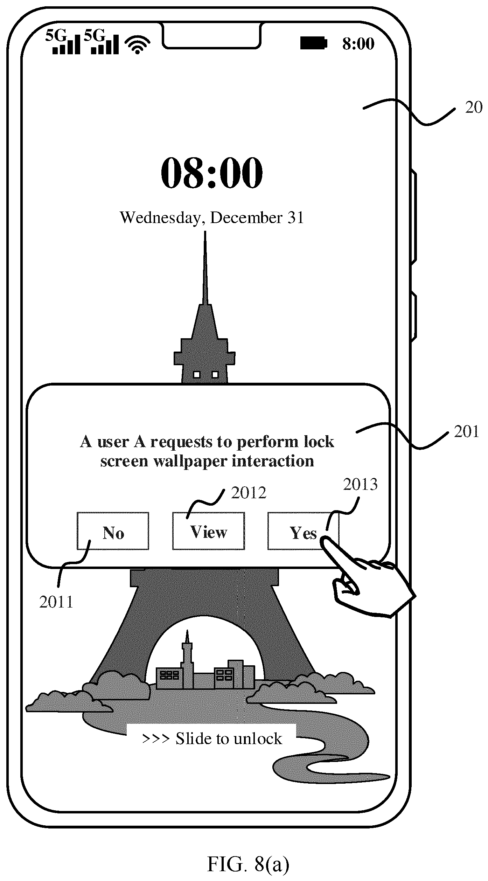

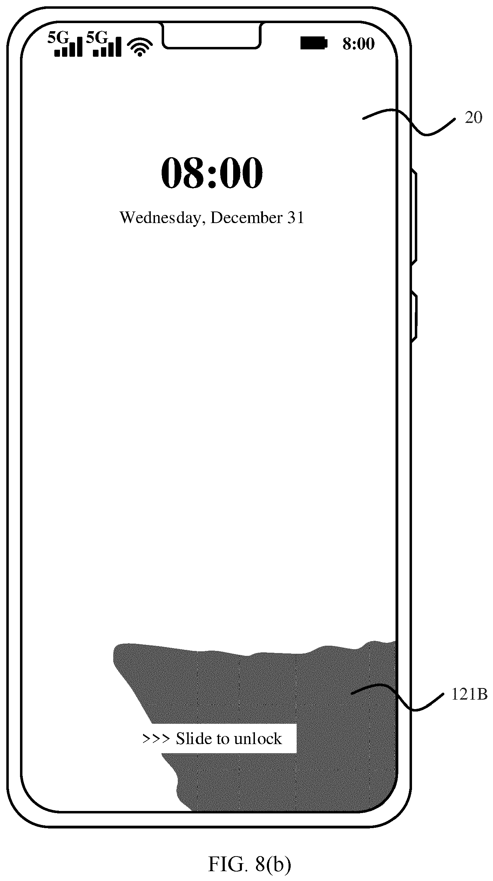

In some embodiments, after the electronic device 100B receives the interaction appearance package application request sent by the electronic device 100A, a prompt may be displayed on an interface of the electronic device 100B. Further, the user B of the electronic device 100B may accept or reject the interaction appearance package application request of the electronic device 100A. For example, FIG. 8(a) and FIG. 8(b) are a schematic diagram of an interface on which the electronic device 100B accepts the interaction appearance package application request and applies the interaction appearance package. Similarly, for example, the appearance package sent by the electronic device 100A includes the lock screen wallpaper. As shown in FIG. 8(a), after the associated electronic device 100B receives the interaction appearance package application request sent by the electronic device 100A, a lock screen interaction request window 201 may be displayed on a lock screen interface 20 of the electronic device 100B or the current display interface of the electronic device 100B. The lock screen interaction request window 201 may include a rejection control 2011, a view control 2012, and an acceptance control 2013. The rejection control 2011 is used to reject a lock screen wallpaper interaction request of the electronic device 100A. The view control 2012 is used to view detailed content of the lock screen wallpaper interaction, and the like. The acceptance control 2013 is used to accept the lock screen wallpaper interaction request of the electronic device 100A. For example, in response to an operation performed by the user B on the acceptance control 2013, the electronic device 100B applies the interaction appearance package sent by the electronic device 100A. The appearance element of the interaction appearance package may include an associated wallpaper 121B of the wallpaper 121A. As shown in FIG. 8(b), after the electronic device 100B applies the interaction appearance package, the associated wallpaper 121B of the wallpaper 121A is displayed on the lock screen interface 20 of the electronic device 100B.

In some other embodiments, the electronic device 100B may set the electronic device 100A in advance as a device that agrees to accept appearance package interaction. After the electronic device 100B receives the interaction appearance package application request sent by the electronic device 100A, the electronic device 100B may directly apply the appearance package. Similarly, as shown in FIG. 8(b), after the electronic device 100B applies the interaction appearance package, the associated wallpaper 121B of the wallpaper 121Ais displayed on the lock screen interface 20 of the electronic device 100B.

S408: The electronic device 100A and the associated electronic device 100B perform appearance package interaction.

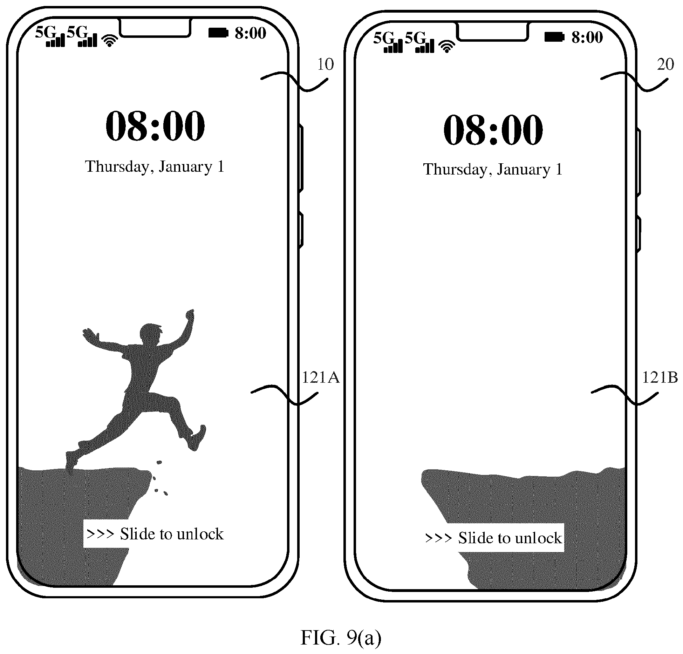

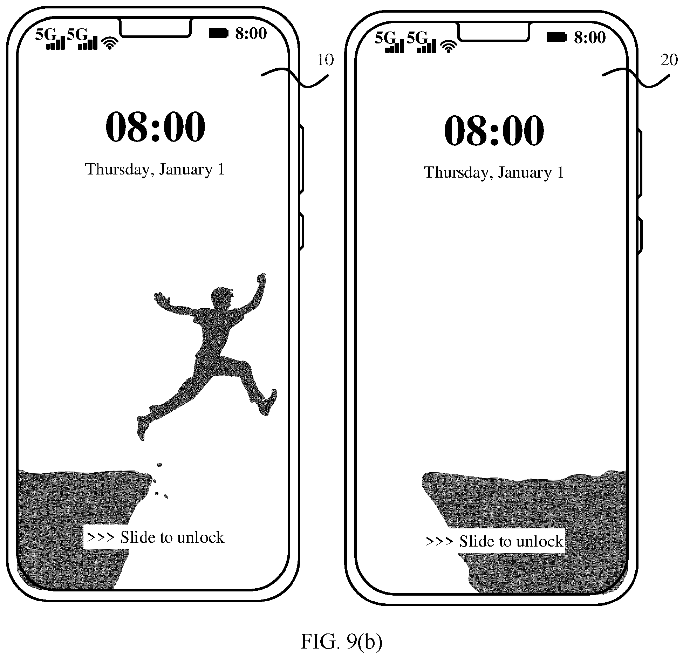

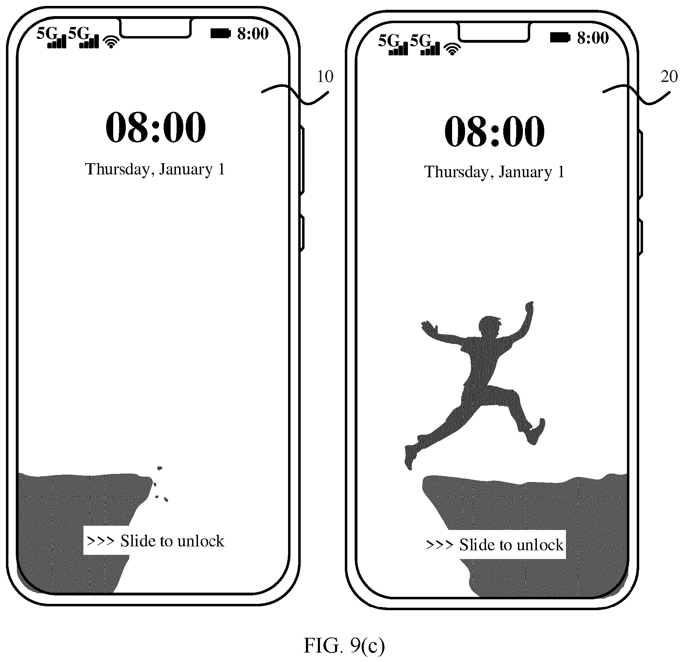

For example, the appearance element of the appearance package includes the lock screen wallpaper. FIG. 9(a) to FIG. 9(c) are a schematic diagram of an interface on which the electronic device 100A performs lock screen wallpaper interaction with the associated electronic device 100B. As shown in FIG. 9(a), the lock screen wallpaper 121A is displayed on a lock screen interface 10 of the electronic device 100A, and the lock screen wallpaper 121B associated with the wallpaper 121A is displayed on the lock screen interface 20 of the associated electronic device 100B. When a specific preset condition is met, the electronic device 100A performs lock screen wallpaper interaction with the associated electronic device 100B. For example, as shown in FIG. 9(b) and FIG. 9(c), a character on the lock screen wallpaper 121A moves to the associated lock screen wallpaper 121B. The preset condition may be the foregoing near-field sensing interaction, interaction at a predetermined time, real-time interaction, Bluetooth/hotspot connection interaction, or the like. It may be understood that this embodiment shows merely an example of a manner in which the electronic device 100A performs lock screen wallpaper interaction with the associated electronic device 100B. There may be a plurality of manners of interaction between the electronic devices, such as a landscape combination, character interaction, and element interaction. This is not limited in this application.

S409: The electronic device 100A and the associated electronic device 100B end interaction.

For example, when the specific preset condition is no longer met or interaction is completed, the electronic device 100A and the associated electronic device 100B may end interaction. For example, the preset condition is near-field sensing interaction. When a distance between the electronic devices increases and the condition is accordingly no longer met, appearance package interaction between the electronic devices ends. After ending interaction, the electronic device 100A and the associated electronic device 100B may be respectively restored to a status existing before interaction.

It may be understood that, in step S408, there may be a plurality of implementations of triggering associated appearance package interaction between the electronic devices. For example, the following provides several manners of triggering interaction between the electronic devices.

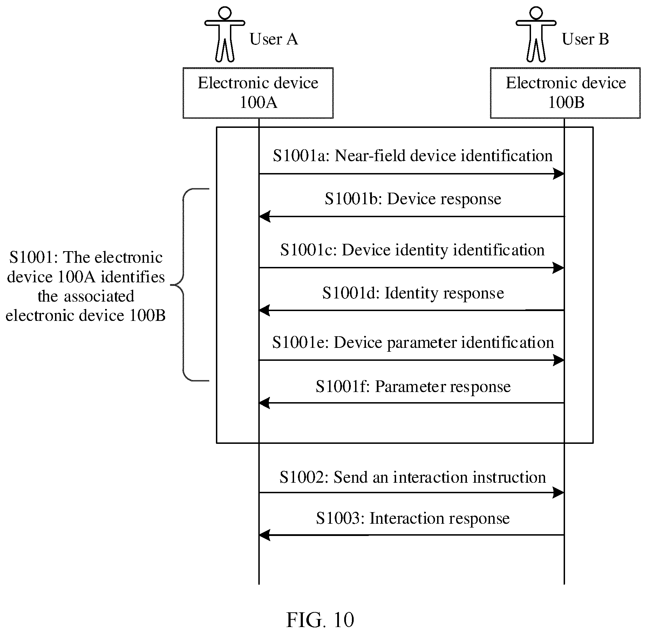

Manner 1: The electronic device 100A and the associated electronic device 100B trigger associated appearance package interaction through near-field sensing. FIG. 10 is a schematic flowchart of performing near-field sensing interaction by the electronic device 100A and the associated electronic device 100B.

As shown in FIG. 10, the method may include but is not limited to the following steps.

S1001: The electronic device 100A detects or identifies the associated electronic device 100B.

For example, the electronic device 100A may identify, through NFC near-field identification or by using the identity, the distance sensor, or the like, that the associated electronic device 100B approaches. In step S1001a, after a near-field sensor in the electronic device 100A identifies the associated electronic device 100B, a near-field device identification request is sent to the associated electronic device 100B, to perform near-field device identification. Correspondingly, in step S1001b, the electronic device 100B receives and responds to the near-field device identification request, to implement near-field device identification and connection establishment. In step S1001c, the electronic device 100A sends a device identity identification request to the associated electronic device 100B. Correspondingly, in step S1001d, the electronic device 100B receives and responds to the identity identification request, to implement identity authentication. In step S1001e, the electronic device 100A sends a device parameter identification request, for example, a distance identification request, to the associated electronic device 100B. Correspondingly, in step S1001f, the electronic device 100B receives the device parameter identification request and performs parameter response, to identify an associated device parameter. Optionally, the associated device parameter may include the device information of the electronic device 100B. In other words, the associated device parameter may also include one or more of the device form, the screen display size, and the user information of the electronic device 100B.

It may be understood that, in step S1001, the electronic device 100A may send one or more of the near-field device identification request, the device identity identification request, and the device parameter identification request to the associated electronic device 100B. For example, in an identity authentication-free scenario, the electronic device 100A and the associated electronic device 100B may not need to perform device identity identification shown in step S1001c and step S1001d. For another example, the electronic device 100A may receive, in step S404, the information about the associated device sent by the electronic device 100B, and the electronic device 100A and the associated electronic device 100B may not need to perform associated device parameter identification shown in step S1001e and step S1001f.

S1002: The electronic device 100A sends an interaction instruction to the associated electronic device 100B.

S1003: The associated electronic device 100B sends an interaction response to the electronic device 100A.

Further, the electronic device 100A and the associated electronic device 100B may perform associated device interaction, to present an interaction effect to the user.

Optionally, in step S1003, the associated electronic device 100B may directly interact with the electronic device 100A without sending an interaction response to the electronic device 100A. Alternatively, it may be understood that, that the associated electronic device 100B sends the interaction response to the electronic device 100A means that the associated electronic device 100B interacts with the electronic device 100A.

According to the near-field sensing interaction method, after the electronic device 100A identifies, through NFC near-field identification or by using the identity, the distance sensor, or the like, that the associated electronic device 100B approaches, interaction effects separately installed on the electronic device 100A and the associated electronic device 100B are triggered and respectively presented to the user A and the user B.

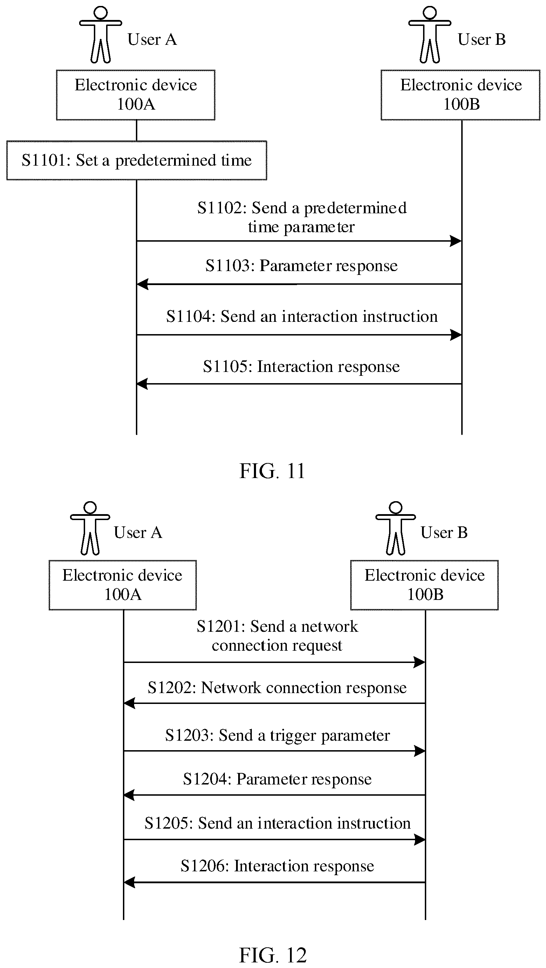

Manner 2: The electronic device 100A and the associated electronic device 100B trigger associated appearance package interaction at a predetermined time. FIG. 11 is a schematic flowchart of interaction between the electronic device 100A and the associated electronic device 100B at the predetermined time.

As shown in FIG. 11, the method may include but is not limited to the following steps.

S1101: The electronic device 100A sets the predetermined time, namely, a time at which associated interaction is triggered, for example, a date or a time point. For example, the user A may directly set a specific date for triggering interaction, or may set a holiday for triggering interaction.

S1102: The electronic device 100A sends a predetermined time parameter to the associated electronic device 100B.

Optionally, the electronic device 100A may also set the interaction effect parameter in step S1101, and send the interaction effect parameter to the electronic device 100B in step S1102.

S1103: The associated electronic device 100B sends the parameter response to the electronic device 100A.

In this embodiment, step S1101 in which the electronic device 100A sets the predetermined time for triggering interaction and/or sets the interaction effect parameter may be performed after the interaction appearance package is generated in step S405. Then, after generating the interaction appearance package, the electronic device 100A sends the predetermined time parameter and/or the interaction effect parameter to the associated electronic device 100B.

In some other embodiments, step S1101 may alternatively be completed in a process of generating the interaction appearance package in step S405. As described above, in step S405, the electronic device 100A may generate the interaction appearance package for the electronic device B based on the interaction parameter selected by the user. The interaction parameter selected by the user may include the one or more of the interaction contact, the interaction device, the interaction trigger condition, and the interaction effect (or referred to as the interaction effect parameter). The interaction trigger condition may be triggering interaction at the predetermined time. Further, the interaction trigger condition may include a specific time for triggering associated interaction.

S1104: The electronic device 100A sends an interaction instruction to the associated electronic device 100B.

S1105: The associated electronic device 100B sends an interaction response to the electronic device 100A.

For example, after the predetermined time is reached, the electronic device 100A may send the interaction instruction to the electronic device 100B, and the electronic device 100B may complete response. Further, the electronic device 100A and the associated electronic device 100B perform associated device interaction, to present the interaction effect to the user.

In some embodiments, step S1102 and step S1103 may not need to be performed. In other words, after the predetermined time is reached, the electronic device 100A may directly send the interaction instruction to the associated electronic device 100B to trigger associated device interaction, and the electronic device 100B does not need to obtain the predetermined time parameter in advance.

Optionally, in step S1105, the associated electronic device 100B may directly interact with the electronic device 100A without sending an interaction response to the electronic device 100A. Alternatively, it may be understood that, that the associated electronic device 100B sends the interaction response to the electronic device 100A means that the associated electronic device 100B interacts with the electronic device 100A.

According to the foregoing method of interaction at the predetermined time, the electronic device 100A and the associated electronic device 100B can separately present the interaction effects to the user A and the user B at the predetermined time, to implement associated interaction between the devices.

Manner 3: The user may trigger associated appearance package interaction through real-time interaction. FIG. 12 is a schematic flowchart of real-time interaction between the electronic device 100A and the associated electronic device 100B.

As shown in FIG. 12, the method may include but is not limited to the following steps.

S1201: The electronic device 100A sends a network connection request to the associated electronic device 100B.

S1202: The associated electronic device 100B sends a network connection response to the electronic device 100A.

For example, the electronic device 100A may initiate, based on the information about the associated device, the network connection request to the associated electronic device B in a communication manner, for example, a network or Bluetooth. After the associated electronic device 100B completes response, the electronic device 100A and the associated electronic device 100B may establish a network connection between the devices.

S1203: The electronic device 100A sends a trigger parameter to the associated electronic device 100B.

For example, the trigger parameter sent by the electronic device 100A may be the interaction effect parameter or the like.

S1204: The associated electronic device 100B sends a parameter response to the electronic device 100A.

S1205: The electronic device 100A sends an interaction instruction to the associated electronic device 100B.

S1206: The associated electronic device 100B sends an interaction response to the electronic device 100A.

Further, the electronic device 100A and the associated electronic device 100B perform associated device interaction, to present an interaction effect to the user.

In an implementation, a network connection is already established between the electronic device 100A and the associated electronic device 100B. In response to a trigger operation performed by the user for real-time interaction, the electronic device 100A may send the trigger parameter and/or the interaction instruction to the associated electronic device 100B, to trigger associated interaction. In other words, step S1201 and step S1202 may not need to be performed.

In another implementation, no network connection is established between the electronic device 100A and the associated electronic device 100B. In response to a trigger operation performed by the user for real-time interaction, the electronic device 100A may initiate a network connection request to the associated electronic device 100B. It may be understood that steps S1201, S1203, and S1205 may all be triggered by an operation performed by the user. This is not limited in this application.

In some embodiments, step S1202 and step S1203 may not need to be performed. In other words, the electronic device 100A may not need to send the trigger parameter to the associated electronic device 100B in advance. In step S1205, when sending the interaction instruction to the associated electronic device 100B, the electronic device 100A may also send the trigger parameter to the associated electronic device 100B.

Optionally, in step S1206, the associated electronic device 100B may directly interact with the electronic device 100A without sending an interaction response to the electronic device 100A. Alternatively, it may be understood that, that the associated electronic device 100B sends the interaction response to the electronic device 100A means that the associated electronic device 100B interacts with the electronic device 100A.

According to the foregoing real-time interaction method, in response to a real-time operation performed by the user, the electronic device 100A and the associated electronic device 100B can trigger real-time interaction between the devices.

In the foregoing embodiments, an example in which the appearance element included in the interaction appearance package is the lock screen wallpaper is used for description. In another embodiment, the appearance element included in the interaction appearance package may be at least one of a theme, a wallpaper (including a home screen wallpaper and a lock screen wallpaper), an icon, a font, a ringtone, and an always-on display style. For a process of appearance package interaction between the electronic devices, refer to the related descriptions of lock screen wallpaper interaction in the foregoing embodiments.

For example, a wallpaper and an icon of the electronic device 100A are respectively presented as a wallpaper 1 and an icon 1, and a wallpaper and an icon included in the interaction appearance package generated by the electronic device 100A are respectively presented as a wallpaper 2 and an icon 2. A style of the wallpaper 1 may be similar to that of the wallpaper 2, and a style of the icon 1 may be similar to that of the icon 2. After the electronic device 100B applies the interaction appearance package and triggers appearance package interaction with the electronic device 100A, the wallpaper 1 and the wallpaper 2 may be combined into a complete image or an association effect may be displayed, and an association effect of the icon 1 and the icon 2 may be displayed. After associated interaction between the devices ends (for example, during interaction triggered through near-field sensing, the distance between the devices increases), the associated electronic devices may be restored to the status existing before interaction.

It may be understood that scenarios of appearance package interaction between the associated devices may be in different forms, for example, a birthday, an anniversary, a parent-child suit, and a couple suit, and can be defined by the user. The following uses a birthday scenario as an example to describe an interaction effect of the theme.

For example, the user A of the electronic device 100A is a master user. After the user A installs an interaction theme of the birthday scenario, the electronic device 100A may set a theme style 1 of the electronic device 100A based on a birthday of the user A. When the user A sets the birthday theme, the electronic device 100A may generate, for the electronic device 100B based on the information about the associated electronic device 100B, a theme style 2 that adapts to the theme style 1. Optionally, when the birthday of the user A is not reached, the electronic device 100A and the associated electronic device 100B do not trigger associated device interaction, and the electronic device 100A and the associated electronic device 100B may respectively display themes with similar but different styles. When the electronic device 100A and the associated electronic device 100B trigger near-field sensing interaction, the electronic device 100A and the associated electronic device 100B may display, in a screen combination manner, scenario images of the birthday over years set in a theme resource, to create a warm memory for the user. When the birthday of the user A is about to be reached, the electronic device 100B may add a reminder for the user B, and recommend a celebration and interaction plan. When the birthday of the user A is reached, the electronic device 100A and the associated electronic device 100B may automatically trigger, based on a setting, the birthday celebration and interaction plan, and the electronic device 100A and the associated electronic device 100B may respectively generate different theme effects. According to the method, interestingness of using the electronic device is improved, and interaction between the users is improved.

Based on some of the foregoing embodiments, the following describes the appearance setting method provided in this application.

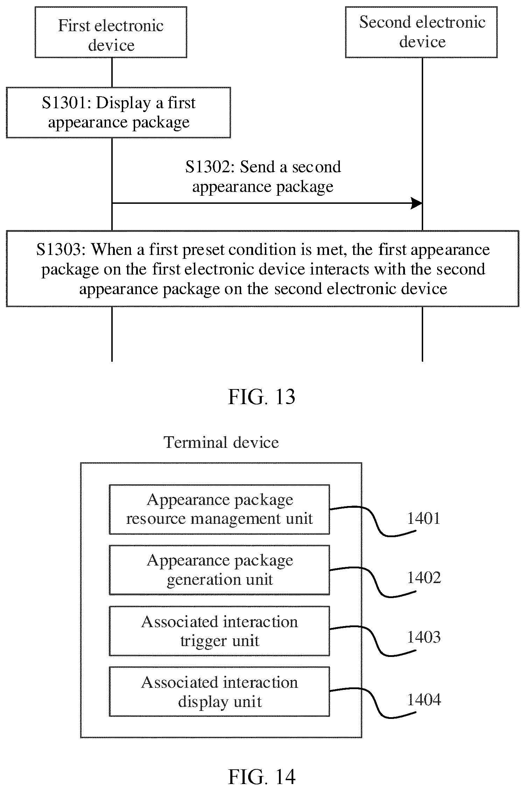

FIG. 13 is a schematic flowchart of the appearance setting method according to an embodiment of this application. As shown in FIG. 13, the appearance setting method in this application may include the following steps.

S1301: A first electronic device displays a first appearance package.

For example, the first electronic device may be the electronic device 100A in the foregoing embodiments. For example, an appearance element of the first appearance package includes a lock screen wallpaper. The appearance element of the first appearance package may include the wallpaper 121A shown in FIG. 5(d).

S1302: The first electronic device sends a second appearance package to a second electronic device, where the second appearance package is associated with the first appearance package.

That the second appearance package is associated with the first appearance package may alternatively be described as that an appearance element of the second appearance package is associated with the appearance element of the first appearance package.

For example, the second electronic device may be the electronic device 100B in the foregoing embodiments. When the appearance element of the first appearance package includes the wallpaper 121A shown in FIG. 5(d), the appearance element of the second appearance package may include the associated wallpaper 121B shown in FIG. 8(b).

In some other embodiments, the first appearance package and the second appearance package may also include other appearance elements. For example, the first appearance package and/or the second appearance package may include at least one of the following appearance elements: a theme, a home screen wallpaper, a lock screen wallpaper, an icon, a font, a ringtone, and an always-on display style. This is not limited in this application.

S1303: When a first preset condition is met, the first appearance package on the first electronic device interacts with the second appearance package on the second electronic device.

Specifically, the first preset condition may be that the first electronic device and the second electronic device implement near-field sensing, or a preset time is reached.

In an implementation, when the first preset condition is that the first electronic device and the second electronic device implement near-field sensing, that the first appearance package on the first electronic device interacts with the second appearance package on the second electronic device may include: When the first electronic device determines that the second electronic device is at a preset distance, the first electronic device sends an interaction instruction to the second electronic device, so that the first appearance package on the first electronic device interacts with the second appearance package on the second electronic device. For steps of triggering appearance package interaction when the first electronic device and the second electronic device implement near-field sensing, refer to the related descriptions in the embodiment shown in FIG. 10. Details are not described herein again.

In another implementation, when the first preset condition is that the preset time is reached, that the first appearance package on the first electronic device interacts with the second appearance package on the second electronic device includes: When the preset time is reached, the first electronic device sends an interaction instruction to the second electronic device, so that the first appearance package on the first electronic device interacts with the second appearance package on the second electronic device. For steps of triggering appearance package interaction by the first electronic device and the second electronic device at the predetermined time, refer to the related descriptions in the embodiment shown in FIG. 11. Details are not described herein again.

In another embodiment, the first electronic device and the second electronic device may alternatively implement appearance package interaction when another preset condition is met. For example, appearance package interaction is triggered when the second electronic device is connected to Bluetooth/a hotspot of the first electronic device, or appearance package interaction is triggered through real-time interaction. This is not limited in this application.

In some embodiments, in step S1302, before that the first electronic device sends a second appearance package to a second electronic device, the first electronic device may generate the second appearance package based on device information of the second electronic device. Further, the first electronic device may generate the second appearance package based on the device information of the second electronic device and an interaction parameter.

For example, the device information of the second electronic device may include at least one of the following: a device form of the second electronic device, a screen display size of the second electronic device, and user information of the second electronic device. The interaction parameter may include at least one of the following: an interaction contact, an interaction device, an interaction trigger condition, and an interaction effect parameter. It may be understood that, in this embodiment, the interaction device is the second electronic device, and the interaction trigger condition is the first preset condition.

According to the appearance setting method provided in this application, an electronic device can automatically generate, based on information about an associated device, an appearance package resource with an association effect, and apply the appearance package resource to a corresponding device. In addition, associated electronic devices can further trigger, based on a specific scenario and a user setting, appearance package interaction between the associated electronic devices. This can improve interestingness of using an appearance package, improve user experience, and enhance interaction and communication between users.

In an example, the appearance setting method provided in embodiments of this application may be implemented based on a plurality of related functional units in a terminal device. For example, as shown in FIG. 14, the terminal device may include an appearance package resource management unit 1401, an appearance package generation unit 1402, an associated interaction trigger unit 1403, and an associated interaction display unit 1404.

The appearance package resource management unit 1401 is configured to manage an appearance package resource. The appearance package generation unit 1402 is configured to automatically generate a matched associated appearance package resource for an associated electronic device based on appearance package information selected by a primary device and device information of the associated device. The associated interaction trigger unit 1403 is configured to trigger appearance package interaction between associated electronic devices. A method for triggering appearance package interaction may be triggering through near-field sensing, triggering at a predetermined time, triggering through real-time interaction, or the like described in the foregoing embodiments. The associated interaction display unit 1404 is configured to display an associated interaction effect for a user.

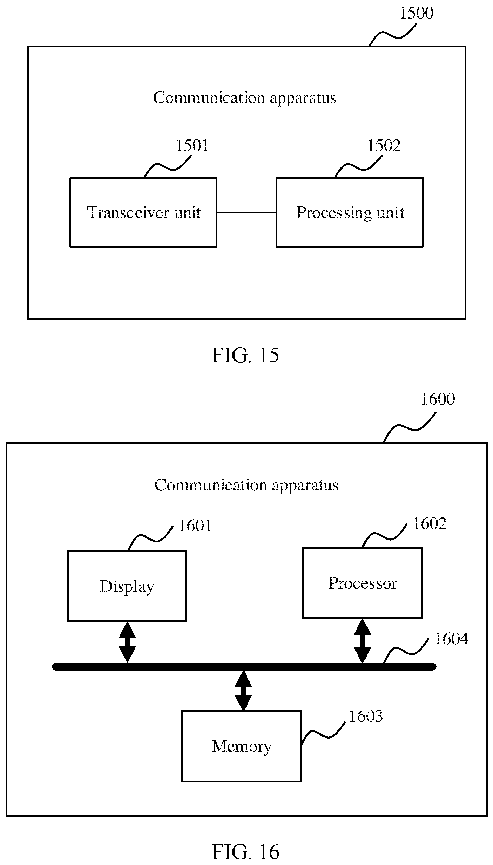

Based on the foregoing embodiments and a same concept, an embodiment of this application further provides an electronic device. As shown in FIG. 15, the electronic device 1500 includes a transceiver unit 1501 and a processing unit 1502. The processing unit 1501 and the transceiver unit 1501 collaborate to implement the method performed by the first electronic device or the second electronic device in the appearance setting method provided in embodiments of this application.

Based on the foregoing embodiments and a same concept, an embodiment of this application further provides an electronic device. The electronic device is configured to implement the method performed by the first electronic device or the second electronic device in the appearance setting method provided in embodiments of this application. As shown in FIG. 16, the electronic device 1600 may include a display 1601, one or more processors 1602, a memory 1603, and one or more computer programs (not shown in the figure). The foregoing components may be coupled through one or more communication buses 1604.

The display 1601 is configured to display a related user interface, for example, an image, a video, or an application interface. The memory 1603 stores one or more computer programs (code), and the one or more computer programs include computer instructions. The one or more processors 1602 invoke the computer instructions stored in the memory 1603, to enable the electronic device 1600 to perform the content sharing method provided in embodiments of this application.

During specific implementation, the memory 1603 may include a high-speed random access memory, and may also include a non-volatile memory, for example, one or more magnetic disk storage devices, a flash memory device, or another non-volatile solid-state storage device. The memory 1603 may store an operating system (referred to as a system for short below), for example, an embedded operating system like Android, iOS, Windows, or Linux. The memory 1603 may be configured to store a program for implementing embodiments of this application. The memory 1603 may further store a network communication program. The network communication program may be used to communicate with one or more additional devices, one or more pieces of user equipment, or one or more network devices. The one or more processors 1602 may be a general-purpose central processing unit (Central Processing Unit, CPU), a microprocessor, an application-specific integrated circuit (Application-Specific Integrated Circuit, ASIC), or one or more integrated circuits configured to control execution of programs for the solutions in this application.

It should be noted that FIG. 16 is merely an implementation of the electronic device 1600 provided in embodiments of this application. During actual application, the electronic device 1600 may further include more or fewer components. This is not limited herein.

Based on the foregoing embodiments and a same concept, an embodiment of this application further provides a computer-readable storage medium. The computer-readable storage medium stores a computer program. When the computer program is run on a computer, the computer is enabled to perform the appearance setting method provided in the foregoing embodiments.

Based on the foregoing embodiments and a same concept, an embodiment of this application further provides a computer program product. The computer program product includes a computer program or instructions. When the computer program or the instructions are run on a computer, the computer is enabled to perform the appearance setting method provided in the foregoing embodiments.

All or some of the methods provided in embodiments of this application may be implemented by using software, hardware, firmware, or any combination thereof. When software is used to implement the methods, all or some of the methods may be implemented in a form of a computer program product. The computer program product includes one or more computer instructions. When the computer program instruction is loaded and executed on the computer, the procedure or functions according to embodiments of the present invention are all or partially generated. The computer may be a general-purpose computer, a dedicated computer, a computer network, a network device, user equipment, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another web site, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

## Claims

1. An appearance setting method, applied to a first electronic device, wherein the method comprises:
displaying (S1301), by the first electronic device, a first appearance package, wherein the first appearance package comprises at least one appearance element, the at least one appearance element being a content displayed by the first electronic device;
sending (S1302), by the first electronic device, a second appearance package to a second electronic device, wherein the second appearance package is used to be installed on the second electronic device for an appearance setting on the second electronic device in that at least one appearance element of the second appearance package is associated with the at least one appearance element of the first appearance package; and
when a first preset condition is met, triggering and performing (S1303), by the first electronic device and the second electronic device, an interaction between the associated appearance elements of the first appearance package and the second appearance package, the interaction comprising displaying, on the first electronic device and on the second electronic device, respective interaction effects of the associated appearance elements, wherein the first preset condition is that the first electronic device and the second electronic device implement near-field sensing, or a preset time is reached;
wherein when the first preset condition is that the first electronic device and the second electronic device implement near-field sensing, the triggering and performing the interaction comprises:
when the first electronic device determines that the second electronic device is at a preset distance, sending, by the first electronic device, an interaction instruction to the second electronic device, and in response, rendering, by the first electronic device, the interaction effect of the associated appearance elements so that the associated appearance elements displayed on the first electronic device and on the second electronic device present an interaction; and
wherein when the first preset condition is that the preset time is reached, the triggering and performing the interaction comprises:
when the preset time is reached, sending, by the first electronic device, an interaction instruction to the second electronic device, and in response, rendering, by the first electronic device, the interaction effect of the associated appearance elements so that the associated appearance elements displayed on the first electronic device and on the second electronic device present an interaction.

2. The method according to claim 1, wherein before the sending, by the first electronic device, a second appearance package to a second electronic device, the method further comprises:
generating, by the first electronic device, the second appearance package based on device information of the second electronic device.

3. The method according to claim 2, wherein the generating, by the first electronic device, the second appearance package based on device information of the second electronic device comprises:
generating, by the first electronic device, the second appearance package based on the device information of the second electronic device and an interaction parameter, wherein the interaction parameter comprises at least one of the following: an interaction contact, an interaction device, an interaction trigger condition, and an interaction effect parameter, the interaction contact is the second electronic device or a user of the second electronic device, the interaction device is the second electronic device, the interaction trigger condition is the first preset condition, and the interaction effect parameter is an animation effect during appearance package interaction.

4. The method according to claim 2 or 3, wherein the device information of the second device comprises at least one of the following: a device form of the second electronic device, a screen display size of the second electronic device, and user information of the second electronic device.

5. The method according to any one of claims 1 to 4, wherein the first appearance package or the second appearance package comprises or both comprise at least one of the following appearance elements: a theme, a home screen wallpaper, a lock screen wallpaper, an icon, a font, a ringtone, and an always-on display style.

6. An appearance setting method, applied to a second electronic device, wherein the method comprises:
applying, by the second electronic device, a second appearance package sent by a first electronic device, wherein the second appearance package is installed on the second electronic device for an appearance setting on the second electronic device, wherein the second appearance package is associated with a first appearance package, and the first appearance package is an appearance package displayed on the first electronic device, wherein the first appearance package comprises at least one appearance element, the at least one appearance element being a content displayed by the first electronic device, and at least one appearance element of the second appearance package is associated with the at least one appearance element of the first appearance package; and
when a first preset condition is met, triggering and performing, by the second electronic device and the first electronic device, an interaction between the associated appearance elements of the second appearance package and the first appearance package, the interaction comprising displaying, on the second electronic device and on the first electronic device, respective interaction effects of the associated appearance elements, wherein the first preset condition is that the second electronic device and the first electronic device implement near-field sensing, or a preset time is reached,
wherein when the first preset condition is that the first electronic device and the second electronic device implement near-field sensing, the triggering and performing the interaction comprises:
when the first electronic device is at a preset distance from the second electronic device, receiving, by the second electronic device, an interaction instruction sent by the first electronic device, and in response, rendering, by the second electronic device, the interaction effect of the associated appearance elements so that the associated appearance elements displayed on the second electronic device and on the first electronic device present an interaction; and
wherein when the first preset condition is that the preset time is reached, the triggering and performing the interaction comprises:
when the preset time is reached, receiving, by the second electronic device, an interaction instruction sent by the first electronic device, and in response, rendering, by the second electronic device, the interaction effect of the associated appearance elements so that the associated appearance elements displayed on the second electronic device and on the first electronic device present an interaction.

7. The method according to claim 6, wherein before the applying, by the second electronic device, a second appearance package sent by a first electronic device, the method further comprises:
receiving, by the second electronic device, the second appearance package sent by the first electronic device.

8. The method according to claim 7, wherein the second appearance package is generated based on device information of the second electronic device and an interaction parameter, and the interaction parameter comprises at least one of the following: an interaction contact, an interaction device, an interaction trigger condition, and an interaction effect parameter, the interaction contact is the second electronic device or a user of the second electronic device, the interaction device is the second electronic device, and the interaction trigger condition is the first preset condition, and the interaction effect parameter is an animation effect during appearance package interaction.

9. The method according to claim 8, wherein the device information of the second device comprises at least one of the following: a device form of the second electronic device, a screen display size of the second electronic device, and user information of the second electronic device.

10. The method according to any one of claims 7 to 9, wherein the first appearance package or the second appearance package comprises or both comprise at least one of the following appearance elements: a theme, a home screen wallpaper, a lock screen wallpaper, an icon, a font, a ringtone, and an always-on display style.

11. An electronic device, wherein the electronic device comprises a display, a memory, and one or more processors, wherein
the memory is configured to store computer program code, the computer program code comprises computer instructions, and when the computer instructions are executed by the one or more processors, the electronic device is enabled to perform the method according to any one of claims 1 to 5, or perform the method according to any one of claims 6 to 10.

## Patentansprüche

1. Erscheinungsbildeinstellungsverfahren, das auf eine erste elektronische Vorrichtung angewendet wird, wobei das Verfahren umfasst:
Anzeigen (S1301), durch die erste elektronische Vorrichtung, eines ersten Erscheinungsbildpakets, wobei das erste Erscheinungsbildpaket mindestens ein Erscheinungsbildelement umfasst, wobei das mindestens eine Erscheinungsbildelement ein Inhalt, der durch die erste elektronische Vorrichtung angezeigt wird, ist;
Senden (S1302), durch die erste elektronische Vorrichtung, eines zweiten Erscheinungsbildpakets an eine zweite elektronische Vorrichtung, wobei das zweite Erscheinungsbildpaket verwendet wird, um auf der zweiten elektronischen Vorrichtung für eine Erscheinungsbildeinstellung auf der zweiten elektronischen Vorrichtung installiert zu werden, dahingehend, dass mindestens ein Erscheinungsbildelement des zweiten Erscheinungsbildpakets mit dem mindestens einen Erscheinungsbildelement des ersten Erscheinungsbildpakets verknüpft ist; und
wenn eine erste voreingestellte Bedingung erfüllt ist, Auslösen und Durchführen (S1303), durch die erste elektronische Vorrichtung und die zweite elektronische Vorrichtung, einer Interaktion zwischen den verknüpften Erscheinungsbildelementen des ersten Erscheinungsbildpakets und des zweiten Erscheinungsbildpakets, wobei die Interaktion das Anzeigen, auf der ersten elektronischen Vorrichtung und auf der zweiten elektronischen Vorrichtung, jeweiliger Interaktionseffekte der verknüpften Erscheinungsbildelemente umfasst, wobei die erste voreingestellte Bedingung ist,
dass die erste elektronische Vorrichtung und die zweite elektronische Vorrichtung eine Nahfelderfassung implementieren, oder eine voreingestellte Zeit erreicht ist;
wobei, wenn die erste voreingestellte Bedingung ist, dass die erste elektronische Vorrichtung und die zweite elektronische Vorrichtung die Nahfelderfassung implementieren, das Auslösen und Durchführen der Interaktion umfasst:
wenn die erste elektronische Vorrichtung bestimmt, dass sich die zweite elektronische Vorrichtung in einem voreingestellten Abstand befindet, Senden, durch die erste elektronische Vorrichtung, einer Interaktionsanweisung an die zweite elektronische Vorrichtung, und als Reaktion darauf, Rendern, durch die erste elektronische Vorrichtung, des Interaktionseffekts der verknüpften Erscheinungsbildelemente, sodass die verknüpften Erscheinungsbildelemente, die auf der ersten elektronischen Vorrichtung und auf der zweiten elektronischen Vorrichtung angezeigt werden, eine Interaktion darstellen; und
wobei, wenn die erste voreingestellte Bedingung ist, dass die voreingestellte Zeit erreicht ist, das Auslösen und Durchführen der Interaktion umfasst:
wenn die voreingestellte Zeit erreicht ist, Senden, durch die erste elektronische Vorrichtung, einer Interaktionsanweisung an die zweite elektronische Vorrichtung, und als Reaktion darauf, Rendern, durch die erste elektronische Vorrichtung, des Interaktionseffekts der verknüpften Erscheinungsbildelemente, sodass die verknüpften Erscheinungsbildelemente, die auf der ersten elektronischen Vorrichtung und auf der zweiten elektronischen Vorrichtung angezeigt werden, eine Interaktion darstellen.

2. Verfahren nach Anspruch 1, wobei vor dem Senden, durch die erste elektronische Vorrichtung, eines zweiten Erscheinungsbildpakets an eine zweite elektronische Vorrichtung, das Verfahren ferner umfasst:
Erzeugen, durch die erste elektronische Vorrichtung, des zweiten Erscheinungsbildpakets basierend auf Vorrichtungsinformationen der zweiten elektronischen Vorrichtung.

3. Verfahren nach Anspruch 2, wobei das Erzeugen, durch die erste elektronische Vorrichtung, des zweiten Erscheinungsbildpakets basierend auf Vorrichtungsinformationen der zweiten elektronischen Vorrichtung umfasst:
Erzeugen, durch die erste elektronische Vorrichtung, des zweiten Erscheinungsbildpakets basierend auf den Vorrichtungsinformationen der zweiten elektronischen Vorrichtung und einem Interaktionsparameter, wobei der Interaktionsparameter mindestens eines der Folgenden umfasst: einen Interaktionskontakt, eine Interaktionsvorrichtung, eine Interaktionsauslösebedingung und einen Interaktionseffektparameter, wobei der Interaktionskontakt die zweite elektronische Vorrichtung oder ein Benutzer der zweiten elektronischen Vorrichtung ist, die Interaktionsvorrichtung die zweite elektronische Vorrichtung ist, die Interaktionsauslösebedingung die erste voreingestellte Bedingung ist und der Interaktionseffektparameter ein Animationseffekt während der Erscheinungsbildpaketinteraktion ist.

4. Verfahren nach Anspruch 2 oder 3, wobei die Vorrichtungsinformationen der zweiten Vorrichtung mindestens eines der Folgenden umfassen: eine Vorrichtungsform der zweiten elektronischen Vorrichtung, eine Bildschirmanzeigegröße der zweiten elektronischen Vorrichtung und Benutzerinformationen der zweiten elektronischen Vorrichtung.

5. Verfahren nach einem der Ansprüche 1 bis 4, wobei das erste Erscheinungsbildpaket oder das zweite Erscheinungsbildpaket mindestens eines der folgenden Erscheinungsbildelemente umfasst oder beide mindestens eines der folgenden Erscheinungsbildelemente umfassen: ein Thema, ein Startbildschirmhintergrundbild, ein Sperrbildschirmhintergrundbild, ein Symbol, eine Schriftart, einen Klingelton und einen Always-On-Display-Stil.

6. Erscheinungsbildeinstellungsverfahren, das auf eine zweite elektronische Vorrichtung angewendet wird, wobei das Verfahren umfasst:
Anwenden, durch die zweite elektronische Vorrichtung, eines zweiten Erscheinungsbildpakets, das durch eine erste elektronische Vorrichtung gesendet wird, wobei das zweite Erscheinungsbildpaket auf der zweiten elektronischen Vorrichtung für eine Erscheinungsbildeinstellung auf der zweiten elektronischen Vorrichtung installiert ist, wobei das zweite Erscheinungsbildpaket mit einem ersten Erscheinungsbildpaket verknüpft ist, und das erste Erscheinungsbildpaket ein Erscheinungsbildpaket ist, das auf der ersten elektronischen Vorrichtung angezeigt wird, wobei das erste Erscheinungsbildpaket mindestens ein Erscheinungsbildelement umfasst, wobei das mindestens eine Erscheinungsbildelement ein Inhalt ist, der durch die erste elektronische Vorrichtung angezeigt wird, und mindestens ein Erscheinungsbildelement des zweiten Erscheinungsbildpakets mit dem mindestens einen Erscheinungsbildelement des ersten Erscheinungsbildpakets verknüpft ist; und
wenn eine erste voreingestellte Bedingung erfüllt ist, Auslösen und Durchführen, durch die zweite elektronische Vorrichtung und die erste elektronische Vorrichtung, einer Interaktion zwischen den verknüpften Erscheinungsbildelementen des zweiten Erscheinungsbildpakets und des ersten Erscheinungsbildpakets, wobei die Interaktion das Anzeigen, auf der zweiten elektronischen Vorrichtung und auf der ersten elektronischen Vorrichtung, jeweiliger Interaktionseffekte der verknüpften Erscheinungsbildelemente umfasst, wobei die erste voreingestellte Bedingung ist, dass die zweite elektronische Vorrichtung und die erste elektronische Vorrichtung die Nahfelderfassung implementieren, oder eine voreingestellte Zeit erreicht ist, wobei, wenn die erste voreingestellte Bedingung ist, dass die erste elektronische Vorrichtung und die zweite elektronische Vorrichtung die Nahfelderfassung implementieren, das Auslösen und Durchführen der Interaktion umfasst:
wenn sich die erste elektronische Vorrichtung in einem voreingestellten Abstand von der zweiten elektronischen Vorrichtung befindet, Empfangen, durch die zweite elektronische Vorrichtung, einer Interaktionsanweisung, die durch die erste elektronische Vorrichtung gesendet wird, und als Reaktion darauf, Rendern, durch die zweite elektronische Vorrichtung, des Interaktionseffekts der verknüpften Erscheinungsbildelemente, sodass die verknüpften Erscheinungsbildelemente, die auf der zweiten elektronischen Vorrichtung und auf der ersten elektronischen Vorrichtung angezeigt werden, eine Interaktion darstellen; und
wobei, wenn die erste voreingestellte Bedingung ist, dass die voreingestellte Zeit erreicht ist, das Auslösen und Durchführen der Interaktion umfasst:
wenn die voreingestellte Zeit erreicht ist, Empfangen, durch die zweite elektronische Vorrichtung, einer Interaktionsanweisung, die durch die erste elektronische Vorrichtung gesendet wird, und als Reaktion darauf, Rendern, durch die zweite elektronische Vorrichtung, des Interaktionseffekts der verknüpften Erscheinungsbildelemente, sodass die verknüpften Erscheinungsbildelemente, die auf der zweiten elektronischen Vorrichtung und auf der ersten elektronischen Vorrichtung angezeigt werden, eine Interaktion darstellen.

7. Verfahren nach Anspruch 6, wobei vor dem Anwenden, durch die zweite elektronische Vorrichtung, eines zweiten Erscheinungsbildpakets, das durch eine erste elektronische Vorrichtung gesendet wird, das Verfahren ferner umfasst:
Empfangen, durch die zweite elektronische Vorrichtung, des zweiten Erscheinungsbildpakets, das durch die erste elektronische Vorrichtung gesendet wird.

8. Verfahren nach Anspruch 7, wobei das zweite Erscheinungsbildpaket basierend auf Vorrichtungsinformationen der zweiten elektronischen Vorrichtung und einem Interaktionsparameter erzeugt wird, und der Interaktionsparameter mindestens eines der Folgenden umfasst: einen Interaktionskontakt, eine Interaktionsvorrichtung, eine Interaktionsauslösebedingung und einen Interaktionseffektparameter, wobei der Interaktionskontakt die zweite elektronische Vorrichtung oder ein Benutzer der zweiten elektronischen Vorrichtung ist, die Interaktionsvorrichtung die zweite elektronische Vorrichtung ist, die Interaktionsauslösebedingung die erste voreingestellte Bedingung ist und der Interaktionseffektparameter ein Animationseffekt während der Erscheinungsbildpaketinteraktion ist.

9. Verfahren nach Anspruch 8, wobei die Vorrichtungsinformationen der zweiten Vorrichtung mindestens eines der Folgenden umfassen: eine Vorrichtungsform der zweiten elektronischen Vorrichtung, eine Bildschirmanzeigegröße der zweiten elektronischen Vorrichtung und Benutzerinformationen der zweiten elektronischen Vorrichtung.

10. Verfahren nach einem der Ansprüche 7 bis 9, wobei das erste Erscheinungsbildpaket oder das zweite Erscheinungsbildpaket mindestens eines der folgenden Erscheinungsbildelemente umfasst oder beide mindestens eines der folgenden Erscheinungsbildelemente umfassen: ein Thema, ein Startbildschirmhintergrundbild, ein Sperrbildschirmhintergrundbild, ein Symbol, eine Schriftart, einen Klingelton und einen Always-On-Display-Stil.

11. Elektronische Vorrichtung, wobei die elektronische Vorrichtung eine Anzeige, einen Speicher und einen oder mehrere Prozessoren umfasst, wobei der Speicher konfiguriert ist, um Computerprogrammcode zu speichern, der Computerprogrammcode Computeranweisungen umfasst, und wenn die Computeranweisungen durch den einen oder die mehreren Prozessoren ausgeführt werden, die elektronische Vorrichtung aktiviert wird, um das Verfahren nach einem der Ansprüche 1 bis 5 durchzuführen oder das Verfahren nach einem der Ansprüche 6 bis 10 durchzuführen.

## Revendications

1. Procédé de réglage d'apparence, appliqué à un premier dispositif électronique, dans lequel le procédé comprend :
l'affichage (S1301), par le premier dispositif électronique, d'un premier paquet d'apparence, dans lequel le premier paquet d'apparence comprend au moins un élément d'apparence, l'au moins un élément d'apparence étant un contenu affiché par le premier dispositif électronique ;
l'envoi (S1302), par le premier dispositif électronique, d'un second paquet d'apparence à un second dispositif électronique, dans lequel le second paquet d'apparence est utilisé pour être installé sur le second dispositif électronique pour un réglage d'apparence sur le second dispositif électronique, à savoir qu'au moins un élément d'apparence du second paquet d'apparence est associé à l'au moins un élément d'apparence du premier paquet d'apparence ; et
lorsqu'une première condition prédéfinie est satisfaite, le déclenchement et la réalisation (S1303), par le premier dispositif électronique et le second dispositif électronique, d'une interaction entre les éléments d'apparence associés du premier paquet d'apparence et du second paquet d'apparence, l'interaction comprenant l'affichage, sur le premier dispositif électronique et sur le second dispositif électronique, d'effets d'interaction respectifs des éléments d'apparence associés, dans lequel la première condition prédéfinie est le fait que le premier dispositif électronique et le second dispositif électronique mettent en œuvre une détection en champ proche, ou qu'un temps prédéfini est atteint ;
dans lequel, lorsque la première condition prédéfinie est le fait que le premier dispositif électronique et le second dispositif électronique mettent en œuvre une détection en champ proche, le déclenchement et la réalisation de l'interaction comprennent :
lorsque le premier dispositif électronique détermine que le second dispositif électronique est à une distance prédéfinie, l'envoi, par le premier dispositif électronique, d'une instruction d'interaction au second dispositif électronique, et en réponse, le rendu, par le premier dispositif électronique, de l'effet d'interaction des éléments d'apparence associés de sorte que les éléments d'apparence associés affichés sur le premier dispositif électronique et sur le second dispositif électronique présentent une interaction ; et
dans lequel, lorsque la première condition prédéfinie est le fait que le temps prédéfini est atteint, le déclenchement et la réalisation de l'interaction comprennent :
lorsque le temps prédéfini est atteint, l'envoi, par le premier dispositif électronique, d'une instruction d'interaction au second dispositif électronique et, en réponse, le rendu, par le premier dispositif électronique, de l'effet d'interaction des éléments d'apparence associés de sorte que les éléments d'apparence associés affichés sur le premier dispositif électronique et sur le second dispositif électronique présentent une interaction.

2. Procédé selon la revendication 1, dans lequel, avant l'envoi, par le premier dispositif électronique, d'un second paquet d'apparence à un second dispositif électronique, le procédé comprend en outre :
la génération, par le premier dispositif électronique, du second paquet d'apparence sur la base d'informations de dispositif du second dispositif électronique.

3. Procédé selon la revendication 2, dans lequel la génération, par le premier dispositif électronique, du second paquet d'apparence sur la base d'informations de dispositif du second dispositif électronique comprend :
la génération, par le premier dispositif électronique, du second paquet d'apparence sur la base des informations de dispositif du second dispositif électronique et d'un paramètre d'interaction, dans lequel le paramètre d'interaction comprend au moins l'un parmi les éléments suivants : un contact d'interaction, un dispositif d'interaction, une condition de déclenchement d'interaction et un paramètre d'effet d'interaction, le contact d'interaction est le second dispositif électronique ou un utilisateur du second dispositif électronique, le dispositif d'interaction est le second dispositif électronique, la condition de déclenchement d'interaction est la première condition prédéfinie, et le paramètre d'effet d'interaction est un effet d'animation pendant une interaction de paquet d'apparence.

4. Procédé selon la revendication 2 ou 3, dans lequel les informations de dispositif du second dispositif comprennent au moins l'un parmi les éléments suivants : une forme de dispositif du second dispositif électronique, une taille d'affichage d'écran du second dispositif électronique, et des informations d'utilisateur du second dispositif électronique.

5. Procédé selon l'une quelconque des revendications 1 à 4, dans lequel le premier paquet d'apparence ou le second paquet d'apparence comprend ou les deux comprennent au moins l'un parmi les éléments d'apparence suivants : un thème, un fond d'écran d'accueil, un fond d'écran de verrouillage, une icône, une police, une sonnerie et un style d'affichage permanent.

6. Procédé de réglage d'apparence, appliqué à un second dispositif électronique, dans lequel le procédé comprend :
l'application, par le second dispositif électronique, d'un second paquet d'apparence envoyé par un premier dispositif électronique, dans lequel le second paquet d'apparence est installé sur le second dispositif électronique pour un réglage d'apparence sur le second dispositif électronique, dans lequel le second paquet d'apparence est associé à un premier paquet d'apparence, et le premier paquet d'apparence est un paquet d'apparence affiché sur le premier dispositif électronique, dans lequel le premier paquet d'apparence comprend au moins un élément d'apparence, l'au moins un élément d'apparence étant un contenu affiché par le premier dispositif électronique, et au moins un élément d'apparence du second paquet d'apparence est associé à l'au moins un élément d'apparence du premier paquet d'apparence ; et
lorsqu'une première condition prédéfinie est satisfaite, le déclenchement et la réalisation, par le second dispositif électronique et le premier dispositif électronique, d'une interaction entre les éléments d'apparence associés du second paquet d'apparence et du premier paquet d'apparence, l'interaction comprenant l'affichage, sur le second dispositif électronique et sur le premier dispositif électronique, d'effets d'interaction respectifs des éléments d'apparence associés, dans lequel la première condition prédéfinie est le fait que le second dispositif électronique et le premier dispositif électronique mettent en œuvre une détection en champ proche, ou qu'un temps prédéfini est atteint,
dans lequel, lorsque la première condition prédéfinie est le fait que le premier dispositif électronique et le second dispositif électronique mettent en œuvre une détection en champ proche, le déclenchement et la réalisation de l'interaction comprennent :
lorsque le premier dispositif électronique est à une distance prédéfinie du second dispositif électronique, la réception, par le second dispositif électronique, d'une instruction d'interaction envoyée par le premier dispositif électronique, et en réponse, le rendu, par le second dispositif électronique, de l'effet d'interaction des éléments d'apparence associés de sorte que les éléments d'apparence associés affichés sur le second dispositif électronique et sur le premier dispositif électronique présentent une interaction ; et
dans lequel, lorsque la première condition prédéfinie est le fait que le temps prédéfini est atteint, le déclenchement et la réalisation de l'interaction comprennent :
lorsque le temps prédéfini est atteint, la réception, par le second dispositif électronique, d'une instruction d'interaction envoyée par le premier dispositif électronique, et en réponse, le rendu, par le second dispositif électronique, de l'effet d'interaction des éléments d'apparence associés de sorte que les éléments d'apparence associés affichés sur le second dispositif électronique et sur le premier dispositif électronique présentent une interaction.

7. Procédé selon la revendication 6, dans lequel, avant l'application, par le second dispositif électronique, d'un second paquet d'apparence envoyé par un premier dispositif électronique, le procédé comprend en outre :
la réception, par le second dispositif électronique, du second paquet d'apparence envoyé par le premier dispositif électronique.

8. Procédé selon la revendication 7, dans lequel le second paquet d'apparence est généré sur la base d'informations de dispositif du second dispositif électronique et d'un paramètre d'interaction, et le paramètre d'interaction comprend au moins l'un parmi les éléments suivants : un contact d'interaction, un dispositif d'interaction, une condition de déclenchement d'interaction et un paramètre d'effet d'interaction, le contact d'interaction est le second dispositif électronique ou un utilisateur du second dispositif électronique, le dispositif d'interaction est le second dispositif électronique, et la condition de déclenchement d'interaction est la première condition prédéfinie, et le paramètre d'effet d'interaction est un effet d'animation pendant une interaction de paquet d'apparence.

9. Procédé selon la revendication 8, dans lequel les informations de dispositif du second dispositif comprennent au moins l'un parmi les éléments suivants : une forme de dispositif du second dispositif électronique, une taille d'affichage d'écran du second dispositif électronique, et des informations d'utilisateur du second dispositif électronique.

10. Procédé selon l'une quelconque des revendications 7 à 9, dans lequel le premier paquet d'apparence ou le second paquet d'apparence comprend ou les deux comprennent au moins l'un parmi les éléments d'apparence suivants : un thème, un fond d'écran d'accueil, un fond d'écran de verrouillage, une icône, une police, une sonnerie et un style d'affichage permanent.

11. Dispositif électronique, dans lequel le dispositif électronique comprend un moyen d'affichage, une mémoire et un ou plusieurs processeurs, dans lequel la mémoire est configurée pour stocker un code de programme informatique, le code de programme informatique comprend des instructions informatiques, et lorsque les instructions informatiques sont exécutées par le ou les processeurs, le dispositif électronique est activé pour réaliser le procédé selon l'une quelconque des revendications 1 à 5, ou réaliser le procédé selon l'une quelconque des revendications 6 à 10.
